# EUROPÄISCHE PATENTSCHRIFT

(11) **EP 1 654 049 B1**
(45) Veröffentlichungstag und Bekanntmachung des Hinweises auf die Patenterteilung: **13.01.2010**
(21) Anmeldenummer: 04741406.5
(22) Anmeldetag: 11.08.2004
(51) Int. Cl.: B01D 36/04, B04B 5/00, B04B 7/02

(54) **VORRICHTUNG ZUM ABTRENNEN VON VERUNREINIGUNGEN AUS DEM SCHMIERÖL EINER BRENNKRAFTMASCHINE**
DEVICE FOR ELIMINATING IMPURITIES FROM THE LUBRICATING OIL OF AN INTERNAL COMBUSTION ENGINE
DISPOSITIF SERVANT A ISOLER DES IMPURETES CONTENUES DANS L'HUILE LUBRIFIANTE D'UN MOTEUR A COMBUSTION INTERNE

(30) Priorität: 13.08.2003 DE 20312484 U
(43) Veröffentlichungstag der Anmeldung: 10.05.2006
(73) Patentinhaber: Hengst GmbH & Co. KG, 48147 Münster (DE)
(72) Erfinder: BAUMANN, Dieter, 48268 Greven (DE)
(74) Vertreter: Linnemann, Winfried
(86) Internationale Anmeldenummer: PCT/EP2004/008988
(87) Internationale Veröffentlichungsnummer: WO 2005/018775

(56) Entgegenhaltungen:
- EP-A- 1 260 260
- WO-A-2004/007052
- DE-A- 10 110 381
- DE-C- 4 306 431

## Beschreibung

Die vorliegende Erfindung betrifft eine Vorrichtung zum Abtrennen von Verunreinigungen aus dem Schmieröl einer Brennkraftmaschine, wobei die Vorrichtung unten einen Filtereinsatz und darüber eine Zentrifuge mit einem mittels durchströmenden Schmieröls antreibbaren Rotor aufweist, wobei der Filtereinsatz und die Zentrifuge übereinander in einem gemeinsamen, im Betrieb der Vorrichtung verschlossenen, zweiteiligen Gehäuse mit einem abnehmbaren oberen Schraubdeckel und einem festen unteren Gehäuseteil angeordnet sind, wobei in dem Gehäuse zwischen Filtereinsatz und Zentrifuge ein herausnehmbarer Zwischendeckel angeordnet ist und wobei aus dem Gehäuse in dessen geöffnetem Zustand die Zentrifuge, der Zwischendeckel und der Filtereinsatz herausnehmbar sind.

Eine Vorrichtung der vorstehend genannten Art ist aus der älteren, nachveröffentlichten WO 2004/007052 A bekannt. Weiterhin weisen bei der bekannten Vorrichtung der Zwischendeckel und der Filtereinsatz erste miteinander in Eingriff bringbare, lösbare Verbindungsmittel zur Übertragung axialer Zugkräfte auf. Zusätzlich weisen der Schraubdeckel und der Zwischendeckel zweite miteinander in Eingriff bringbare, lösbare Verbindungsmittel zur Übertragung axialer Zugkräfte auf, wobei die zweiten Verbindungsmittel durch Verdrehen des Schraubdeckels in seiner Losdrehrichtung relativ zum Zischendeckel in Eingriff und durch Verdrehen des Schraubdeckels in seiner Festdrehrichtung relativ zum Zwischendeckel außer Eingriff bringbar sind und wobei die ersten Verbindungsmittel durch Verdrehen des Schraubdeckels in dessen Losdrehrichtung unter Mitnahme des Zwischendeckels relativ zum Filtereinsatz in Eingriff und durch Verdrehen des Zwischendeckels in entgegengesetzter Richtung relativ zum Filtereinsatz außer Eingriff bringbar sind. Ersichtlich erfordert die Vielzahl der Verbindungsmittel einen erhöhten Fertigungsaufwand bei der Herstellung des Schraubdeckels, des Zwischendeckels und des Filtereinsatzes.

Die EP 1 260 260 A1 betrifft eine Vorrichtung zum Abtrennung von Verunreinigungen aus dem Schmieröl einer Brennkraftmaschine, insbesondere eines Kraftfahrzeuges, mit einem durch einen Deckel verschließbaren Gehäuse, in dem mindestens ein Ringfilterelement angeordnet ist, mit einem am Gehäuseboden ausgebildeten, zentrischen Stutzen, auf den das Ringfilterelement einenends außen aufsteckbar ist, mit einem rohseitigen Zulauf, einem reinseitigen Ablauf und einem relativ drucklosen Rücklauf. Weiter ist hier ein Rohrkörper vorgesehen, der mit seinem dem Gehäuseboden zugewandten Ende in den Stutzen innen eingesteckt ist, wobei radial zwischen dem Stutzen und dem Rohrkörper ein erster Ringraum ausgebildet ist, der durch wenigstens einen im Stutzen ausgebildeten, radialen Durchbruch mit dem Ablauf kommuniziert. Dabei ist das Ringfilterelement anderenends auf einen vom Gehäuseboden abgewandten Endabschnitt des Rohrkörpers außen aufgesteckt, wobei radial zwischen Ringfilterelement und Rohrkörper ein zweiter Ringraum ausgebildet ist, der mit dem ersten Ringraum kommuniziert, wobei ein Innenraum des Rohrkörpers durch eine zentrale Öffnung des Stutzens mit dem Rücklauf kommuniziert. Mit dieser Vorrichtung wird erreicht, dass der Aufwand zur Abdichtung eines Bereiches mit relativ hohem Druck gegenüber einem Bereich mit relativ niedrigem Druck vereinfacht ist. Allerdings ist bei dieser Vorrichtung der Aufwand für das Zerlegen und Zusammenbauen der Vorrichtung, insbesondere im Zusammenhang mit einer Wartung, relativ hoch, weil viele Einzelteile der Vorrichtung jeweils für sich abgebaut oder ausgebaut bzw. ein- oder angebaut werden müssen.

Die DE 101 10 381 A1 zeigt eine Vorrichtung zum Abtrennen von Verunreinigungen aus einem Schmieröl einer Brennkraftmaschine, mit einem durch einen Deckel verschließbaren Gehäuse, in dem ein Filterelement und eine mittels durchströmenden Schmieröls antreibbare Zentrifuge axial hintereinander angeordnet sind. Wesentlich ist bei dieser Vorrichtung, dass das Filterelement und die Zentrifuge an einem gemeinsamen, zentralen Stab gehaltert sind. Hierdurch ergibt sich die Möglichkeit, den zentralen Stab zusammen mit der daran gehalterten Zentrifuge und mit dem daran gehalterten Filterelement aus dem Gehäuse herauszunehmen und in das Gehäuse einzubauen. Als nachteilig wird bei dieser Vorrichtung allerdings angesehen, dass der zentrale Stab als weiteres Einzelteil gefertigt werden muss und dass der zentrale Stab Raum innerhalb des Gehäuses einnimmt, was auf Kosten der Größe des Filterelements und der Zentrifuge geht.

Eine weitere Vorrichtung zum Abtrennen von Verunreinigungen aus dem Schmieröl einer Brennkraftmaschine ist aus der DE 43 06 431 C1 bekannt. Wenn bei dieser bekannten Vorrichtung der Schraubdeckel als abnehmbarer Teil des Gehäuses in seiner Losdrehrichtung verdreht wird, bewegt sich zunächst nur der Schraubdeckel in seinem Gewinde vom festen.Teil des Gehäuses weg nach oben. Der im oberen Teil des Gehäuses angeordnete Rotor der Zentrifuge behält dabei seine Lage bei. Nach dem Abnehmen des Gehäusedeckels steht der Rotor der Zentrifuge in seinem unteren Lager. Dann kann als nächstes der Zentrifugenrotor abgenommen werden. Danach ist der Zwischendeckel zugänglich. Der Zwischendeckel muss aus dem unteren Teil des Gehäuses nach oben herausgezogen werden. Sofern zwischen dem Zwischendeckel und dem Filtereinsatz lösbare Verbindungsmittel vorgesehen sind, nimmt dabei der Zwischendeckel den unter ihm angeordneten Filtereinsatz nach oben mit. Nach Herausnehmen der Kombination aus Zwischendeckel und Filtereinsatz kann der Filtereinsatz durch Verkanten oder durch Ausüben einer Zugkraft in Axialrichtung aus dem Zwischendeckel ausgerastet und herausgezogen werden und es kann ein frischer Filtereinsatz in den Zwischendeckel eingesteckt und mit diesem über die lösbaren Verbindungsmittel verbunden werden.

Der Zusammenbau der Vorrichtung erfolgt dann in umgekehrter Reihenfolge wie das Zerlegen, nämlich indem zuerst der Zwischendeckel zusammen mit dem Filtereinsatz in den unteren Teil des Gehäuses eingeführt wird. Danach wird dann der Zentrifugenrotor mit seinem unteren Lager auf den Zwischendeckel aufgesetzt. Als letztes wird der Schraubdeckel aufgeschraubt, wobei darauf zu achten ist, dass das obere Lager des Zentrifugenrotors seine Soll-Position im Zentrum des oberen inneren Endes des Schraubdeckels einnimmt.

Die Zerlegung und der Zusammenbau dieser bekannten Vorrichtung sind ersichtlich relativ aufwendig und umständlich. Zudem ist es bei der Zerlegung erforderlich, mit Öl behaftete Teile, insbesondere den Zwischendeckel, manuell oder mit einem geeigneten Werkzeug zu ergreifen. Hierbei ergibt sich neben der Verschmutzung der Hände des Bedienungspersonals das weitere Problem, dass ein ausreichend festes Ergreifen des Zwischendeckels aufgrund seiner öligen Oberfläche schwierig ist. Dadurch ist das Herausziehen des Zwischendeckels aus dem unteren Teil des Gehäuses gegen die auftretenden Reibungskräfte und gegen ein gegebenenfalls vorliegendes Vakuum erschwert.

Für die vorliegende Erfindung stellt sich deshalb die Aufgabe, eine Vorrichtung der eingangs genannten Art zu schaffen, die die aufgeführten Nachteile vermeidet und bei der insbesondere das Zerlegen und das Zusammenbauen, insbesondere im Zusammenhang mit einem Austausch des Filtereinsatzes und/oder des Zentrifugenrotors, einfacher, schneller und sauberer von statten geht.

Eine erste Lösung dieser Aufgabe gelingt erfindungsgemäß mit einer Vorrichtung der eingangs genannten Art, die dadurch gekennzeichnet ist, dass nur der Schraubdeckel und der Zwischendeckel miteinander in Eingriff bringbare, lösbare Verbindungsmittel zur Übertragung axialer Zugkräfte oder axialer Zug- und Druckkräfte aufweisen und dass in Beziehung zueinander der Zwischendeckel und der Filtereinsatz unverbundene Einzelteile der Vorrichtung sind und der Zwischendeckel und/oder der Filtereinsatz verbindungsmittelfrei ausgeführt sind/ist.

Mit der Erfindung wird vorteilhaft erreicht, dass bei einem Losdrehen des Schraubdeckels gleichzeitig schon der Zwischendeckel und die dazwischen liegende Zentrifuge zusammen mit dem Schraubdeckel relativ zum festen Teil des Filtergehäuses nach oben hin, also in Löserichtung bewegt werden. Wenn der Schraubdeckel losgedreht ist, kann dieser zusammen mit dem Zwischendeckel und der Zentrifuge von Gehäuse weg bewegt werden, wobei gleichzeitig der Zwischendeckel und die Zentrifuge aus dem Gehäuse herausbewegt werden. Im Anschluss hieran ist auch der Filtereinsatz unten im Gehäuse frei zugänglich. Ein separates Herausziehen des Zentrifugenrotors und des Zwischendeckels, das mit den weiter oben dargelegten Nachteilen verbunden ist, ist nun nicht mehr erforderlich. Nach dem Abnehmen des Schraubdeckels zusammen mit der Zentrifuge und dem Zwischendeckel kann hier anschließend der Filtereinsatz für sich aus dem Gehäuse entnommen werden; dies kann z.B. rein manuell oder unter Zuhilfenahme eines geeigneten Handhabungswerkzeugs geschehen. Da die Verbindungsmittel zwischen dem Schraubdeckel und dem Zwischendeckel lösbar sind, können diese beiden Teile nach dem gemeinsamen Herausziehen aus dem Gehäuse voneinander getrennt werden, wodurch der Zentrifugenrotor zugänglich wird. Umgekehrt kann eine vormontierte Einheit aus Zwischendeckel, Rotor und Schraubdeckel gebildet werden und gemeinsam in einem einzigen Schraubvorgang mit dem Gehäuse der Vorrichtung wieder verbunden werden. Damit werden das Zerlegen und das Zusammenbauen der Vorrichtung vereinfacht und beschleunigt und es wird ein saubereres Arbeiten für das Bedienungspersonal möglich. Wenn die Verbindungsmittel auch zur Übertragung axialer Druckkräfte ausgelegt sind, können sie zur Ableitung der infolge von Druckdifferenzen beiderseits des Zwischendeckels auf diesen in Richtung zum Schraubdeckel wirkenden Kräften genutzt werden.

In weiterer Ausgestaltung ist vorgesehen, dass die Verbindungsmittel durch Verdrehen des Schraubdeckels in seiner Losdrehrichtung relativ zum Zwischendeckel in Eingriff und durch Verdrehen des Schraubdeckels in seiner Festdrehrichtung relativ zum Zwischendeckel außer Eingriff bringbar sind. Vorteilhaft sind bei dieser Ausgestaltung die Verbindungsmittel durch eine einfache Drehbewegung bedarfsweise in Eingriff und außer Eingriff bringbar. Dabei ist für das Herstellen und für das Lösen des Eingriffs praktisch kein Kraftaufwand erforderlich, wie dies bei einer Rastverbindung der Fall ist, wenn diese hergestellt oder gelöst werden soll. Vorteilhaft wird der Eingriff zur Übertragung von in Axialrichtung wirkenden Zugkräften nur dann hergestellt, wenn er tatsächlich benötigt wird, nämlich beim Zerlegen der Vorrichtung. Dieser Eingriff wird einfach dadurch erzeugt, dass der Schraubdeckel in Losdrehrichtung verdreht wird, was für das Abschrauben des Schraubdeckels vom festen Teil des Gehäuses ohnehin erforderlich ist. Gleichzeitig ist dabei gewährleistet, dass bei einem Losdrehen des Schraubdeckels der Zwischendeckel in gewünschter Weise die Bewegung des Schraubdeckels vom übrigen Gehäuse weg mitmacht. Dadurch wird eine einfache Entnahme des Zwischendeckels aus dem Gehäuse ermöglicht, weil der Zwischendeckel beim Abnehmen des Schraubdeckels gleichzeitig aus dem Gehäuse mitgenommen wird und vom Bedienungspersonal nicht separat für sich aus dem Gehäuse herausgenommen werden muss. Zum Trennen des Zwischendeckels vom Schraubdeckel genügt wieder eine kleine Drehbewegung, nun in Festdrehrichtung des Schraubdeckels, wodurch der Eingriff der Verbindungsmittel zwischen dem Zwischendeckel und dem Schraubdeckel gelöst wird und der Zwischendeckel vom Schraubdeckel getrennt ist. Danach kann z.B. ein verbrauchter Zentrifugenrotor entnommen und durch einen frischen Rotor ersetzt werden. Der Zwischendeckel kann dann in ebenso einfacher Weise durch eine einfache Drehbewegung mit dem Schraubdeckel über die Verbindungsmittel verbunden werden und dann zusammen mit dem Rotor und dem Schraubdeckel als vormontierte Einheit in das Gehäuse eingesetzt und durch Festdrehen des Schraubdeckels im Gehäuse fixiert werden.

Weiter ist bevorzugt vorgesehen, dass die als Drehverbindungsmittel gestalteten Verbindungsmittel von Schraubdeckel und Zwischendeckel bajonettverschlussartig oder als Kurzgewinde ausgeführt sind. In jedem Fall wird so ein vorteilhaft kurzer Drehweg für das Verbinden und Trennen von Schraubdeckel und Zwischendeckel erreicht, was ein schnelles Arbeiten ermöglicht.

Die Erfindung schlägt weiter vor, dass der Zwischendeckel Glockenform hat und auf seinem Außenumfang axial verlaufende Rippen aufweist, die jeweils mit mindestens einer in Umfangsrichtung weisenden Verbreiterung oder Durchbrechung als Verbindungsmittel ausgebildet sind, und dass der Schraubdeckel an seinem unteren Rand in seiner Losdrehrichtung weisende Haken oder Nasen als Verbindungsmittel aufweist, die mit den Verbreiterungen oder Durchbrechungen durch Verdrehen des Schraubdeckels in seiner Losdrehrichtung relativ zum Zwischendeckel in Eingriff und durch Verdrehen des Schraubdeckels in seiner Festdrehrichtung relativ zum Zwischendeckel außer Eingriff bringbar sind. Bei dieser Ausgestaltung braucht der Schraubdeckel lediglich über dessen Umfang verteilt an seiner unteren Stirnkante mehrere, z.B. drei oder vier, Haken oder Nasen, was bei der Herstellung des Schraubdeckels nur einen sehr geringen zusätzlichen Aufwand erfordert. Auch der auf der Seite des Zwischendeckels zusätzlich erforderliche Aufwand zur Bildung der Verbreiterungen oder Durchbrechungen als mit den Haken oder Nasen zusammenwirkende Verbindungsmittel ist relativ gering, so dass auch für die Herstellung des Zwischendeckels kein merklicher zusätzlicher Aufwand entsteht, der die Vorrichtung verteuern würde.

Eine Weiterbildung sieht vor, dass die die Verbreiterungen oder Durchbrechungen aufweisenden Rippen zugleich als Stabilisierungs- und Kraftableitungsrippen zur Versteifung des Zwischendeckels und zur Ableitung von durch einen Öldruck im Inneren des Gehäuses unterhalb des Zwischendeckels hervorgerufenen Kräften auf den Schraubdeckel dienen. Damit erhalten die Rippen zwei Funktionen, wodurch der Material- und Herstellungsaufwand bei Erzielung möglichst vieler Funktionen so gering wie möglich gehalten wird.

Statt im Bereich von Rippen auf dem Außenumfang des Zwischendeckels können dessen Verbindungsmittel auch an anderer Stelle angeordnet sein. Eine bevorzugte weitere Ausgestaltung sieht hierzu vor, dass der Zwischendeckel Glockenform hat und radial außen auf seiner Oberseite mehrere axial nach oben weisende, in Umfangsrichtung voneinander beabstandete Flügel aufweist, die jeweils mit mindestens einer in Umfangsrichtung weisenden Verbreiterung oder Durchbrechung oder einer radial nach innen einspringenden Eintiefung als Verbindungsmittel ausgebildet sind, und dass der Schraubdeckel an seinem unteren Rand in seiner Losdrehrichtung oder radial nach innen weisende Haken oder Nasen als Verbindungsmittel aufweist, die mit den Verbindungsmitteln des Zwischendeckels durch Verdrehen des Schraubdeckels in seiner Losdrehrichtung relativ zum Zwischendeckel in Eingriff und durch Verdrehen des Schraubdeckels in seiner Festdrehrichtung relativ zum Zwischendeckel außer Eingriff bringbar sind. Diese Ausführung hat den spezifischen Vorteil, dass die Verbindungsmittel am Zwischendeckel so weit wie möglich oben in dessen oberem Bereich liegen, was die Verwendung eines vorteilhaft niedrigen Schraubdeckels erlaubt.

Um zu vermeiden, dass beim Festschrauben des Schraubdeckels nach einem vorherigen Einsetzen des Zwischendeckels in das Gehäuse deren Verbindungsmittel sich in Axialrichtung voreinander legen und verklemmen, ist vorgesehen, dass die Verbindungsmittel des Schraubdeckels einerseits und die Flügel mit den Verbindungsmitteln des Zwischendeckels andererseits so angeordnet und ausgebildet sind, dass sie bei bereits in das Gehäuse eingesetztem Zwischendeckel einander bei einem Aufsetzen des Schraubdeckels auf den festen Gehäuseteil vor deren Gewindeeingriff miteinander in Axialrichtung überlappen.

Für eine einfache und schnelle Montage der Vorrichtung ist es, wie vorstehend schon erwähnt, vorteilhaft, Teile der Vorrichtung zu einer vormontierten Baugruppe zusammenfügen zu können. Zur Erleichterung dieses Zusammenfügens ist vorgesehen, dass die Flügel radial außen eine mit Bewegungsspiel in das Innere des Schraubdeckels passende Führungskontur haben. Diese Führungskontur sorgt dafür, dass der Zwischendeckel mit dem von ihm getragenen Zentrifugenrotor in einer exakten axialen Ausrichtung in den Schraubdeckel eingesetzt werden kann, wobei sichergestellt ist, dass ein oberes Wellenende einer Rotorwelle genau in eine Wellenaufnahme im Zentrum der oberen Innenseite des Schraubdeckels gelangt.

Unterhalb des Zwischendeckels herrscht im Betrieb der Vorrichtung ein erheblicher Schmieröldruck, wogegen der Bereich über dem Zwischendeckel drucklos ist. Um die durch die Druckdifferenz hervorgerufenen, auf den Zwischendeckel einwirkenden Kräfte aufzunehmen und in den Schraubdeckel abzuleiten, ist vorgesehen, dass an oder neben den Flügeln je eine vom Zwischendeckel radial nach außen vorspringende Stufe vorgesehen ist, auf denen im festgeschraubten Zustand des Schraubdeckels jeweils ein Abschnitt von dessen Unterkante aufsteht.

Um im zusammengebauten Zustand der Vorrichtung den Zwischendeckel in Umfangsrichtung gegen unerwünschte Drehbewegungen zu fixieren, schlägt die Erfindung vor, dass zumindest ein Teil der Stufen an seinem in Losdrehrichtung des Schraubdeckels weisenden Ende je eine nach oben vorragende Kante aufweist. Diese Kanten bilden im zusammengebauten Zustand eine Drehsperre gegen selbsttätige Drehung des Zwischendeckels relativ zum Schraubdeckel, wobei diese Drehsperre aber durch manuelles Verdrehen beim Lösen des Schraubdeckels leicht überwindbar ist

Damit sichergestellt wird, dass die Unterkante des Schraubdeckels, insbesondere wenn diese keine durchgehende stetige Kontur aufweist, beim Festdrehen des Schraubdeckels sicher auf den Stufen zu liegen kommt, ist in Festdrehrichtung des Schraubdeckels gesehen vor zumindest den eine Kante aufweisenden Stufen am Zwischendeckel je eine in Höhe der Kante liegende, stetige oder unterbrochene Gleitrampe für die Unterkante des Schraubdeckels vorgesehen.

Um die Flügel und den Zwischendeckel insgesamt stabiler und belastbarer zu machen, wird vorgeschlagen, dass die Flügel über einen durchgehenden, umlaufenden Kragen miteinander verbunden oder zu einem durchgehenden, umlaufenden Kragen zusammengefasst sind.

Damit bei von dem festen Gehäuseteil abgeschraubtem Schraubdeckel der mit diesem über die Verbindungsmittel, die sich nun in Eingriff befinden, verbundene Zwischendeckel und der damit verbundene Zentrifugenrotor nicht ungewollt selbsttätig abfallen und dadurch beschädigt werden können, ist vorzugsweise weiter vorgesehen, dass die Verbindungsmittel am Schraubdeckel einerseits und/oder die Verbindungsmittel am Zwischendeckel andererseits an ihren in Eingriff miteinander tretenden Flächen mit einer die Eingriffsstellung sichernden Schräge oder Stufe ausgebildet sind. Hiermit wird eine ausreichend wirksame Lösesicherung geschaffen, die aber manuell leicht überwindbar ist.

Da der Schraubdeckel einerseits Kräfte vom Zwischendeckel aufnehmen und auf diesen ausüben muss und andererseits möglichst leicht sein soll, wird weiter vorgeschlagen, dass der Schraubdeckel zumindest im Bereich seiner Verbindungsmittel an seinem Innenumfang mit Verstärkungsrippen ausgebildet ist. Die Rippen verlaufen entsprechend der Hauptkraftrichtung dabei vorzugsweise in Axialrichtung des Deckels.

Weiter ist für die Vorrichtung bevorzugt vorgesehen, dass der Schraubdeckel und/oder der Zwischendeckel jeweils einstückige Spritzgussteile aus Kunststoff sind. Dies erlaubt eine kostengünstige Massenfertigung und ergibt ein geringes Gewicht der Vorrichtung.

Alternativ können der Schraubdeckel und/oder der Zwischendeckel jeweils einstückige Druckgussteile aus Leichtmetall sein. Auch hier ist eine kostengünstige Massenfertigung möglich, wobei die Teile zwar ein höheres Gewicht, aber zugleich eine höhere Festigkeit und Wärmebeständigkeit haben.

Auch eine Mischbauweise mit unterschiedlichen Materialien für die einzelnen Teile der Vorrichtung ist möglich.

Eine zweite Lösung der oben gestellten Aufgabe gelingt erfindungsgemäß mit einer Vorrichtung der eingangs genannten Art, die dadurch gekennzeichnet ist,
- dass der Schraubdeckel und der Zwischendeckel miteinander in Eingriff bringbare, lösbare Verbindungsmittel zur Übertragung axialer Zugkräfte oder axialer Zug- und Druckkräfte aufweisen,
- dass die Vorrichtung mit einem durchbrochenen, einen Durchfluss von aus dem Rotor austretenden Schmieröl gestattenden, einen Teil des Zwischendeckels bildenden Zentrifugenboden ausgeführt ist,
- dass der Zentrifugenboden in seinem Zentrum eine Aufnahme für ein unteres Drehlager oder unteres Achsende des Rotors aufweist und
- dass der Zentrifugenboden an seinem Außenumfang zumindest in dessen oberem Teil ringförmig mit einem Außengewinde ausgeführt ist, das in ein Gegen-Innengewinde im Inneren des oberen Gehäuseteils einschraubbar ist.

Vorteilhaft wird auch bei dieser Ausführung der Vorrichtung erreicht, dass bei einem Losdrehen des Schraubdeckels gleichzeitig schon der Zwischendeckel und die dazwischen liegende Zentrifuge zusammen mit dem Schraubdeckel relativ zum festen Teil des Filtergehäuses nach oben hin bewegt werden. Wenn der Schraubdeckel losgedreht ist, kann dieser zusammen mit dem Zwischendeckel und der Zentrifuge von Gehäuse weg bewegt werden, wobei gleichzeitig der Zwischendeckel und die Zentrifuge aus dem Gehäuse herausbewegt werden. Ein separates Herausziehen des Zentrifugenrotors und des Zwischendeckels, das mit den weiter oben dargelegten Nachteilen verbunden ist, ist auch hier nicht mehr erforderlich. Im Anschluss hieran ist auch der Filtereinsatz unten im Gehäuse zugänglich. Da die Verbindungsmittel zwischen dem Schraubdeckel und dem Zwischendeckel durch eine Gewindeverbindung gebildet sind, die einfach lösbar ist, können diese beiden Teile nach dem gemeinsamen Herausziehen aus dem Gehäuse durch Auseinanderschrauben voneinander getrennt werden, wodurch der Zentrifugenrotor zugänglich wird. Umgekehrt kann eine vormontierte Einheit aus Zwischendeckel, Rotor und Schraubdeckel gebildet werden und gemeinsam in einem einzigen Schraubvorgang mit dem Gehäuse der Vorrichtung wieder verbunden werden. Damit wird auch in dieser Ausführung der Vorrichtung deren Zerlegen und das Zusammenbauen vereinfacht und beschleunigt und es wird ein saubereres Arbeiten für das Bedienungspersonal möglich. Zugleich wird bei dieser Ausführung der Vorrichtung vorteilhaft eine höhere Genauigkeit der Lagetoleranz der Rotationsachse des Rotors der Zentrifuge erreicht. Diese verbesserte Genauigkeit der Lagetoleranz ist hier insbesondere darauf zurückzuführen, dass nur noch eine Schnittstelle zwischen verschiedenen Bauteilen gibt, die die Genauigkeit der Lagetoleranz bestimmt, nämlich hier die Schnittstelle zwischen dem abnehmbaren Schraubdeckel und dem Zentrifugenboden der Zentrifuge. Der Zentrifugenboden ist in den Schraubdeckel einschraubbar, so dass nur noch die Maßtoleranzen der beiden Gewinde von Zentrifugenboden und Schraubdeckel als Quelle von Lageabweichungen der Drehachse des Zentrifugenrotors auftreten können. Damit weist diese Vorrichtung im Vergleich zu aus dem Stand der Technik bekannten Vorrichtungen zumindest eine derartige Schnittstelle weniger auf, so dass eine entsprechend erhöhte Genauigkeit der Lage und des Verlaufs der Rotationsachse des Zentrifugenrotors erreicht wird. Diese höhere Genauigkeit gewährleistet einen sehr reibungsarmen Lauf des Zentrifugenrotors, so dass die von den Rückstrahldüsen des Rotors aufgebrachte Antriebsenergie zum weitaus größten Teil für die Rotation des Zentrifugenrotors genutzt werden kann und nicht durch Lagerreibung ungenutzt aufgezehrt wird. Auf diese Weise wird ein hoher Wirkungsgrad der Zentrifuge gewährleistet, ohne dass der Durchsatz durch die Zentrifuge erhöht werden muss.

Auch bei der im vorhergehenden Absatz beschriebenen, zweiten Vorrichtung ist aus Gründen einer einfachen Handhabung bevorzugt vorgesehen, dass die Verbindungsmittel durch Verdrehen des Schraubdeckels in seiner Losdrehrichtung relativ zum Zwischendeckel in Eingriff und durch Verdrehen des Schraubdeckels in seiner Festdrehrichtung relativ zum Zwischendeckel außer Eingriff bringbar sind.

In weiterer Ausgestaltung dieser Vorrichtung können der Zentrifugenboden und der Zwischendeckel miteinander einstückig ausgeführt sein. Mit dieser Ausführung wird insbesondere eine vereinfachte und beschleunigte Montage der Vorrichtung bei deren Zusammenbau erreicht. Dem steht ein relativ kompliziertes und deshalb in seiner Fertigung etwas aufwendigeres kombiniertes Bauteil, in dem der Zentrifugenboden und der Zwischendeckel zusammengefasst sind, gegenüber.

Alternativ können der Zentrifugenboden und der Zwischendeckel jeweils als separates Bauteil ausgeführt und miteinander in Axialrichtung in eine dichtende, axiale Zugkräfte oder axiale Zug- und Druckkräfte übertragende Steck- oder Schraubverbindung bringbar sein. Diese Verbindung kann unmittelbar oder über ein eingefügtes Zwischenstück erfolgen. In dieser Ausführung sind die einzelnen Bauteile aufgrund ihrer weniger komplexen Form einfacher herstellbar, jedoch ist dann ein zusätzlicher Montageschritt beim Zusammenbau der Vorrichtung nötig.

Für die Ausführung der Vorrichtung, bei der der Zentrifugenboden und der Zwischendeckel jeweils als separates Bauteil ausgeführt sind, ist weiter vorgesehen, dass zwischen dem Zentrifugenboden und dem Zwischendeckel ein in seiner Axialrichtung hohles Adapterstück als Zwischenstück eingefügt ist, dessen unterer Teil in zentriertem Eingriff mit dem Zwischendeckel und dessen oberer Teil in zentriertem Eingriff mit dem Zentrifugenboden steht, wobei der Außenumfang des Adapterstücks in dessen oberem und/oder unterem Teil eine ballige Kontur hat, die eine begrenzte Verschwenkung des Adapterstücks relativ zur Axialrichtung erlaubt. Das Adapterstück überträgt axiale Zugkräfte und bildet ein Ausgleichselement, das in der Lage ist, sowohl eine Verschwenkung als auch einen seitlichen Versatz der Mittelachse des Zwischendeckels und der,Mittelachse der Zentrifuge relativ zueinander auszugleichen. Auch mit dieser Gestaltung der Vorrichtung wird immer ein leichtgängiger Lauf des Rotors der Zentrifuge gewährleistet, so dass die Antriebskraft des Rotors in gewünschter Weise zur Erzeugung der Rotation eingesetzt wird und nur zu einem geringen Teil zur Überwindung der Lagerreibung verbraucht wird. Hierdurch wird ein hoher Wirkungsgrad der Zentrifuge gewährleistet, auch wenn gewisse Fertigungs- und Montagetoleranzen bei den einzelnen Bauteilen der Vorrichtung auftreten. Sofern das Adapterstück nur in seinem oberen Teil eine ballige Kontur hat, ist eine Verschwenkung nur relativ zur Axialrichtung der Zentrifuge möglich; bei dieser Ausführung ist dann zweckmäßig das untere Lager der Zentrifuge mit einer gewissen Gelenkigkeit ausgeführt, wie beispielsweise in der oben zitierten DE 199 11 212 A1 beschrieben. Wenn das Adapterstück sowohl in seinem oberen wie in seinem unteren Teil eine ballige Kontur hat, ist eine Verschwenkung des Adapterstücks sowohl relativ zur Axialrichtung des Filtereinsatzes als auch relativ zur Axialrichtung der Zentrifuge möglich, so dass allein mittels des Adapterstücks alle Richtungsabweichungen und Richtungsversätze ausgeglichen werden können. Das untere Rotorlager der Zentrifuge braucht dann keine Gelenkigkeit aufzuweisen und kann entsprechend einfacher ausgeführt sein.

Eine Weiterbildung der mit dem Adapterstück ausgestatteten Vorrichtung sieht vor, dass das Adapterstück an seinem Außenumfang zwischen seinem unteren Teil und seinem oberen Teil einen vorragenden Bund oder Kragen aufweist.

Dieser Bund oder Kragen dient insbesondere zur Fixierung einer vorgesehenen Montageposition des Adapterstücks, so dass spezielle Hilfsmittel zur Fixierung des Adapterstücks in seiner Soll-Position nicht benötigt werden.

Weiterhin ist für das Adapterstück vorgesehen, dass es in seinem unteren Teil mehrere in Axialrichtung weisende federnde Rastarme mit Rastnasen aufweist, mit denen das Adapterstück in ein Öldurchlassöffnung im Zwischendeckel rastend einsetzbar ist. Durch die mit Rastnasen versehenen Rastarme ist die Montage des Adapterstücks am Zwischendeckel sehr einfach, da ein einfaches Einstecken genügt. Nach dem Einstecken ist das Adapterstück ausreichend sicher im Zwischendeckel festgelegt.

Weiter ist bevorzugt vorgesehen, dass zur lösbaren Verbindung von Schraubdeckel und unterem Gehäuseteil miteinander der Schraubdeckel mit einem Außengewinde und der untere Gehäuseteil mit einem dazu passenden Innengewinde ausgeführt ist oder der Schraubdeckel mit einem Innengewinde und der untere Gehäuseteil mit einem dazu passenden Außengewinde ausgeführt ist. Wenn am Schraubdeckel ein Außengewinde vorgesehen ist, bleibt der Innenumfang des Schraubdeckels frei für die Anordnung des Innengewindes zur Verschraubung mit dem Zentrifugenboden. Wenn am Schraubdeckel ein Innengewinde zur lösbaren Verbindung von Schraubdeckel und unterem Gehäuseteil vorgesehen ist, dann liegt dieses Innengewinde zweckmäßig ganz unten am Schraubdeckel; darüber kann dann ein weiteres Innengewinde kleineren Durchmessers für die Verschraubung mit dem Zentrifugenboden angeordnet sein.

Damit der Zentrifugenboden einerseits ausreichend stabil und belastbar wird und damit er andererseits die Ableitung des aus dem Zentrifugenrotors austretenden Schmieröls nicht behindert, weist der Zentrifugenboden bevorzugt mehrere radial von der Aufnahme zu seinem Außenumfang mit dem dort vorgesehenen Außengewinde verlaufende, in Umfangsrichtung voneinander beabstandete Arme auf.

Bevorzugt sind dabei in weiterer Ausgestaltung die Arme flächig ausgebildet, wobei deren Flächenebenen jeweils in Radial- und Axialrichtung liegen.

Da der Zwischendeckel den Raum, in dem der Filtereinsatz innerhalb des Gehäuses angeordnet ist, von dem Raum des Filtergehäuses, in dem die Zentrifuge angeordnet ist, trennt und da in diesen beiden Räumen unterschiedliche Druckverhältnisse des Schmieröls vorliegen, muss eine sichere Abdichtung der beiden Gehäuseräume durch den Zwischendeckel gewährleistet sein. Zur Gewährleistung dieser Abdichtung ist zweckmäßig der Zwischendeckel in den unteren Teil des Gehäuses unter Zwischenlage einer Radial- und/oder Axialdichtung eingesteckt. Zweckmäßig ist dabei die Anordnung und Ausgestaltung dieser Dichtung so gewählt, dass der im unteren Gehäuseteil im Bereich des Filtereinsatzes herrschende höhere Druck des Schmieröls die Dichtwirkung der Dichtung fördert und verstärkt. Zugleich wird dennoch eine einfache Montage beibehalten, da der Zwischendeckel einfach in den unteren Teil des Gehäuses eingesteckt ist.

Um den Zwischendeckel in Axialrichtung der Vorrichtung gesehen in einer gewünschten Position zu fixieren, ist weiter vorgesehen, dass bei geschlossenem Gehäuse der Zwischendeckel an seinem Außenumfang an der Oberseite einer Stufe im Innenumfang des unteren Gehäuseteils axial abgestützt ist. Auf diese Weise wird mit einfachen Mitteln, aber sehr zuverlässig, die gewünschte Fixierung der Lage des Zwischendeckels in Axialrichtung nach unten gewährleistet. Für die Fixierung der Lage des Zwischendeckels in Axialrichtung nach oben sorgt der festgedrehte Schraubdeckel.

Aufgrund der vorstehend erläuterten Ausgestaltung der Vorrichtung besteht die vorteilhafte Möglichkeit, dass die Zentrifuge, der Zentrifugenboden, der Zwischendeckel und der Schraubdeckel eine vormontierte Einheit bilden, die mit dem unteren Gehäuseteil verschraubbar ist. Hierdurch wird die vorteilhafte Möglichkeit geschaffen, dass die Vormontage beispielsweise schon bei einem Zulieferer vorgenommen werden kann, wo auch schon die vormontierte Einheit mit der Zentrifuge für sich geprüft werden kann. In einem weiteren Montageschritt muss dann lediglich noch der Filtereinsatz in den unteren Teil des Gehäuses eingesetzt werden, gegebenenfalls der Zwischendeckel eingesetzt werden und dann die vormontierte Einheit mit dem unteren Gehäuseteil verschraubt werden. Dabei besteht die Möglichkeit, auch noch den Filtereinsatz in die vormontierte Einheit einzubeziehen, wenn die entsprechenden lösbaren Verbindungsmittel zwischen dem Zwischendeckel und dem Filtereinsatz vorhanden sind.

In einer Ausgestaltung der Vorrichtung ist vorgesehen, dass die Schraubverbindung zwischen dem Schraubdeckel und dem festen Gehäuseteil und die Schraubverbindung zwischen dem Schraubdeckel und dem Zentrifugenboden gleichsinnige Gewinde aufweisen. Die Gewinde können dabei beide Rechtsgewinde oder beide Linksgewinde sein, wobei Rechtsgewinde wegen der gewohnten Betätigungsrichtungen für das Lösen und Festdrehen bevorzugt sind.

Alternativ können die Schraubverbindung zwischen dem Schraubdeckel und dem festen Gehäuseteil und die Schraubverbindung zwischen dem Schraubdeckel und dem Zentrifugenboden gegensinnige Gewinde aufweisen. Hiermit wird insbesondere erreicht, dass beim Losdrehen des Schraubdeckels vom festen Gehäuseteil sich die Schraubverbindung zwischen Schraubdeckel und Zentrifugenboden nicht ungewollt losdrehen kann, sondern im Gegenteil höchstens festgedreht wird, sodass in jedem Fall der Zwischendeckel wie gewünscht mit dem Schraubdeckel bei dessen Losdrehen verbunden bleibt.

Eine weitere mögliche Maßnahme, die für einen gezielten Zusammenhalt der Einzelteile in der gewünschten Weise sorgt, besteht darin, dass die Schraubverbindung zwischen dem Schraubdeckel und dem Zentrifugenboden ein Losdrehmoment hat, das größer ist als ein Losdrehmoment der Schraubverbindung zwischen dem Schraubdeckel und dem festen Gehäuseteil.

Eine weitere, dem gleichen Zweck dienende Maßnahme besteht darin, dass die Schraubverbindung zwischen dem Schraubdeckel und dem Zentrifugenboden ein Losdrehmoment hat, das größer ist als ein Losbrechmoment zwischen dem Zwischendeckel und dem festen Gehäuseteil.

Zusätzlich oder alternativ kann zumindest für die Schraubverbindung zwischen dem Schraubdeckel und dem Zentrifugenboden eine lösbare Losdrehsicherung vorgesehen sein. Diese Losdrehsicherung kann z.B. ein Konterring oder eine in die Gewindeverbindung eingreifende Sicherungsschraube oder ein Sicherungsstift sein.

Bei der Ausführung der Vorrichtung mit dem Zentrifugenboden sind in einer ersten Version in Beziehung zueinander der Zwischendeckel und der Filtereinsatz unverbundene Einzelteile der Vorrichtung und der Zwischendeckel und/oder der Filtereinsatz sind/ist verbindungsmittelfrei ausgeführt. Nach dem Abnehmen des Schraubdeckels zusammen mit der Zentrifuge, dem Zentrifugenboden und dem Zwischendeckel kann hier anschließend der Filtereinsatz für sich aus dem Gehäuse entnommen werden; dies kann auch hier z.B. rein manuell oder unter Zuhilfenahme eines geeigneten Handhabungswerkzeugs geschehen.

Alternativ zu der vorstehend angegebenen Version können bei der Ausführung der Vorrichtung mit dem Zentrifugenboden der Zwischendeckel und der Filtereinsatz miteinander in Eingriff bringbare, lösbare zweite Verbindungsmittel zur Übertragung axialer Zugkräfte aufweisen. Auf diese Weise wird auch der Filtereinsatz beim Losdrehen des Schraubdeckels schon aus dem Gehäuse entnommen und kann dann außerhalb des Gehäuses von dem Zwischendeckel getrennt und durch einen frischen Filtereinsatz ersetzt werden. Der Einbau erfolgt dann umgekehrt ebenfalls als Einheit, so dass auch das Einsetzen des frischen Filtereinsatzes einfach ist.

Diese lösbare Verbindung zwischen dem Zwischendeckel und dem Filtereinsatz kann unterschiedlich ausgeführt sein; eine erste Weiterbildung dazu schlägt vor, dass diese zweiten Verbindungsmittel als Rastverbindungsmittel gestaltet sind.

Gemäß einer alternativen, zweiten Weiterbildung können die zweiten Verbindungsmittel als Schraubverbindung oder Bajonettverbindung oder Drehverbindung gestaltet sein.

Um auch die mit Zentrifugenboden ausgestattete Vorrichtung möglichst einfach und kostengünstig in großen Stückzahlen und mit einem geringen Gewicht herstellen zu können, wird vorgeschlagen, dass das Gehäuse, der Zentrifugenboden, der Zwischendeckel und das Adapterstück spritztechnisch hergestellte Teile aus Kunststoff oder Leichtmetall sind.

Im Folgenden werden Ausführungsbeispiele der Erfindung anhand einer Zeichnung erläutert. Die Figuren der Zeichnung zeigen:
- Figur 1: eine erste Vorrichtung zum Abtrennen von Verunreinigungen aus dem Schmieröl einer Brennkraftmaschine, mit einem vorab in ein Vorrichtungsgehäuse eingesetzten Zwischendeckel und mit einem noch losen Schraubdeckel, in einer perspektivischen Teilansicht in aufgebrochener Darstellung,
- Figur 2: die Vorrichtung aus Figur 1 in einem Zustand mit festgedrehtem Schraubdeckel, in gleicher Darstellungsweise wie in Figur 1,
- Figur 3: die Vorrichtung aus Figur 2 mit festgedrehtem Schraubdeckel, teils in Seitenansicht, teils im Vertikalschnitt und teils in weggebrochener Darstellung,
- Figur 3a: das in Figur 3 eingekreiste Detail in einer vergrößerten Darstellung,
- Figur 4: die Vorrichtung aus Figur 1 in einem Zustand während eines Verdrehen des Schraubdeckels in Losdrehrichtung, in gleicher Darstellungsweise wie in Figur 1,
- Figur 5: die Vorrichtung in ihrem Zustand gemäß Figur 4 in gleicher Darstellungsweise wie in Figur 3,
- Figur 6: die Vorrichtung in einer zweiten Ausführung im Längsschnitt, teils in Ansicht,
- Figur 7: die Vorrichtung aus Figur 6 im Querschnitt gemäß der Linie VII- VII in Figur 6,
- Figur 8: die Vorrichtung in einer dritten Ausführung, in gleicher Darstellung wie in Figur 6,
- Figur 9: die Vorrichtung in einer vierten Ausführung, in gleicher Darstellung wie in Figur 6.
- Figur 10: die Vorrichtung in einer fünften Ausführung in einem Teil-Längsschnitt und
- Figur 11: die Vorrichtung aus Figur 10 im Teil-Querschnitt gemäß der Schnittlinie XI-XI in Figur 10.

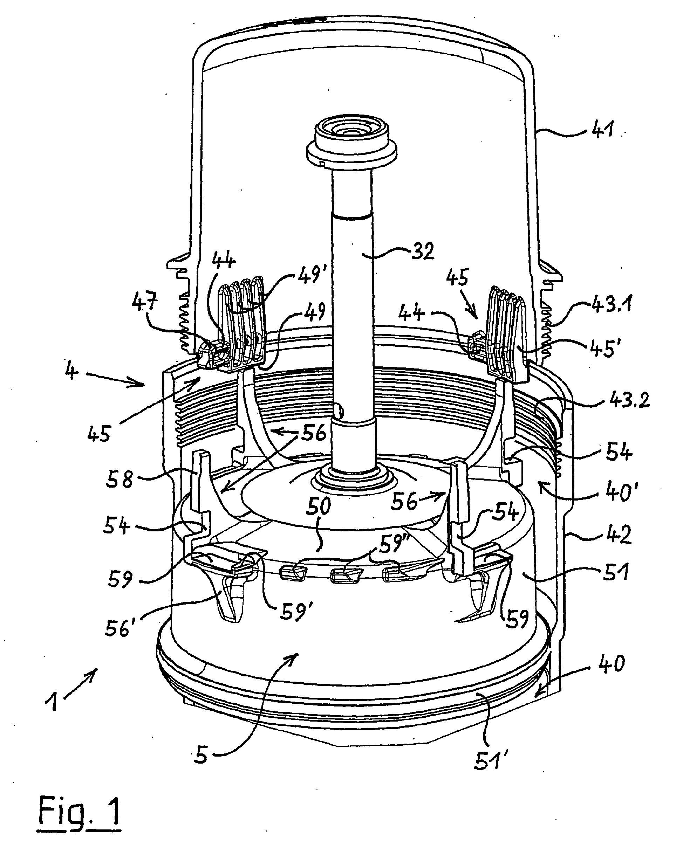

Wie die Figur 1 der Zeichnung zeigt, besitzt das dargestellte Ausführungsbeispiel der Vorrichtung 1 zum Abtrennen von Verunreinigungen aus dem Schmieröl einer Brennkraftmaschine ein Gehäuse 4, das durch einen unteren, festen Gehäuseteil 42 und einen oberen Schraubdeckel 41 gebildet ist. Der Schraubdeckel 41 ist mittels einer durch einen Dichtring abgedichteten Gewindeverbindung 43.1, 43.2 in den festen Gehäuseteil 42 einschraubbar, wobei in Figur 1 der Schraubdeckel 41 in einem vollständig losgedrehten Zustand dargestellt ist.

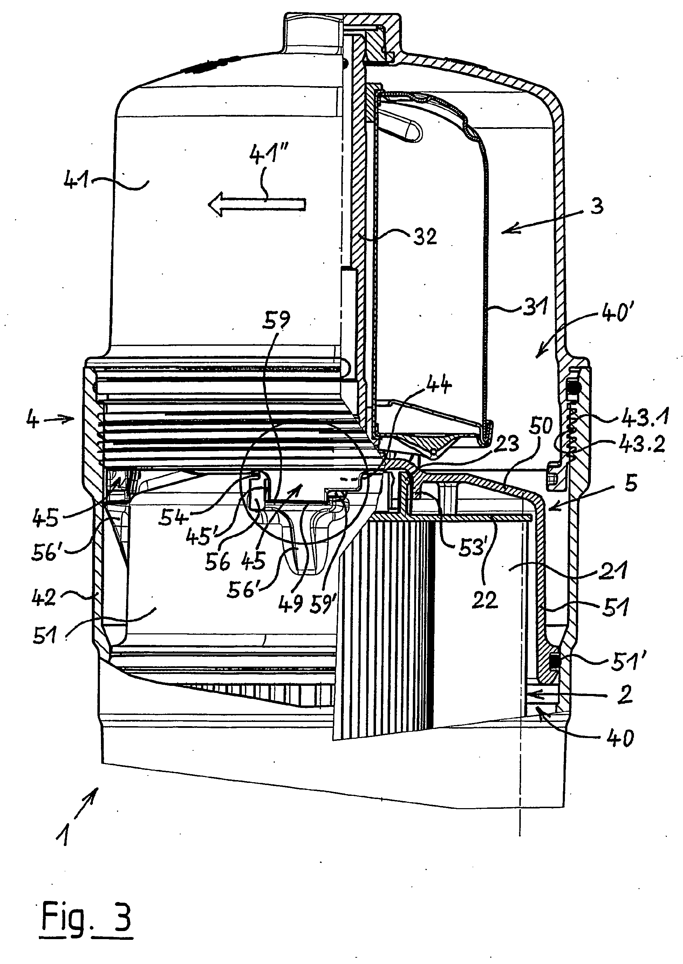

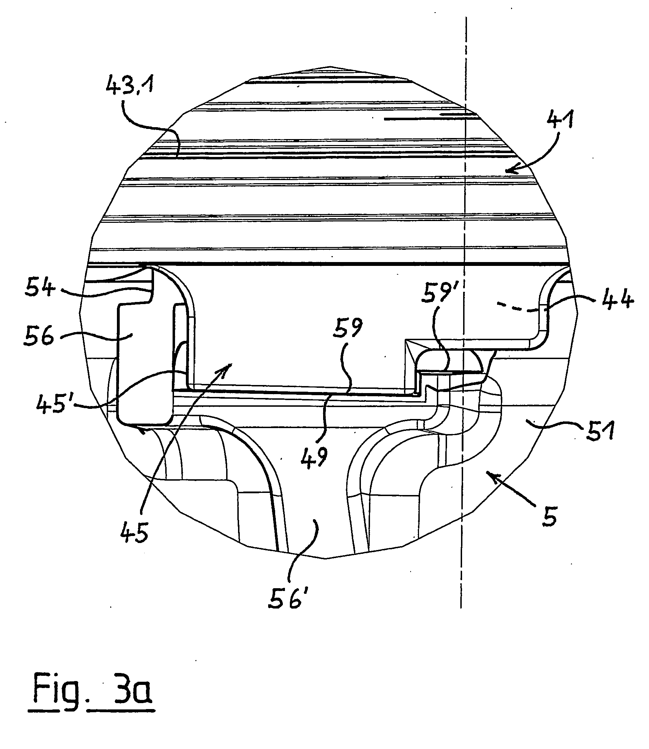

Im Gehäuse 4 ist in dessen unterem Teil ein hier nicht sichtbarer Filtereinsatz 2 angeordnet (vgl. Fig.3). Fluchtend mit dem Filtereinsatz 2 ist über diesem im oberen Teil des Gehäuses 4 eine Zentrifuge 3 (vgl. Fig.3) vorgesehen, von der hier aus Übersichtlichkeitsgründen nur eine Rotorachse 32 dargestellt ist, auf der ein Zentrifugenrotor drehbar gelagert werden kann.

Das Innere des Gehäuses 4 ist durch einen glockenförmigen Zwischendeckel 5 in einen unteren Bereich 40 und einen oberen Bereich 40' unterteilt. Der Zwischendeckel 5 umfasst einen oberen Teil 50, der oberhalb des Filtereinsatzes und unterhalb des Rotors 31 der Zentrifuge 3 liegt. Vom radial äußeren Rand des oberen Teils 50 des Zwischendeckels 5 erstreckt sich eine Umfangswand 51 nach unten. Diese ist an ihrem unteren Ende mittels eines Dichtrings 51' dichtend in den feststehenden Gehäuseteil 42 eingesetzt.

Unterhalb des Zwischendeckels 5 herrscht im Betrieb der Vorrichtung 1 der Betriebsöldruck; oberhalb des Zwischendeckels 5 liegt ein druckloser Bereich 40' als Ablauf für das aus dem Zentrifugenrotor austretende Öl, wobei der Bereich 40' üblicherweise mit einer Ölwanne der zugehörigen Brennkraftmaschine verbunden ist.

Zentral in der Oberseite des oberen Teils 50 des Zwischendeckels 5 ist das untere Ende der Rotorachse 32 gehaltert. Das obere Ende der Rotorachse 32 ist zentral im oberen Endbereich der Innenseite des Schraubdeckels 41 gehaltert.

Zwischen dem unteren Ende des Schraubdeckels 41 und dem Außenumfang des Zwischendeckels 5 sind Verbindungsmittel 45, 54 vorgesehen. Die Verbindungsmittel 45 sind auf der Seite des Schraubdeckels 41 durch in Umfangsrichtung und in dessen Losdrehrichtung weisende Haken 44 gebildet, die an der Unterkante des Schraubdeckels 41 einstückig angeformt sind. Auf der Seite des Zwischendeckels 5 sind auf der Außenseite von dessen Umfangswand 51 in Axialrichtung verlaufende Flügel 56 mit Durchbrechungen 54 an deren radial äußerer Seite einstückig angeformt. Die Durchbrechungen 54 und die Haken 44 bilden dabei die Verbindungsmittel, die, je nach Verdrehungszustand von Schraubdeckel 41 und Zwischendeckel 5 relativ zueinander, entweder außer Eingriff oder in Eingriff treten.

Unmittelbar in Festdrehrichtung neben den Verbindungsmitteln 45 des Schraubdeckels 41 sind Verstärkungsrippen 49' einstückig an den Schraubdeckel 41 angeformt. Diese Rippen 49' gehen in Losdrehrichtung des Deckels 41 in die Haken 44 über. An ihrer in Festdrehrichtung weisenden Seite 45' bildet die Anordnung der Rippen 49' eine glatte vertikal verlaufende Fläche.

Wie an dem losgedrehten Schraubdeckel 41 in Figur 1 an dessen unterem Bereich deutlich erkennbar ist, ragen die Verbindungsmittel 45 etwas nach unten hin vor, wodurch die Unterkante 49 des Schraubdeckels 41 hier etwas tiefer liegt als die Unterkante des Gewindes 43.1 am Schraubdeckel 41. Gleichzeitig sind die Verbindungsmittel 45 am Schraubdeckel 41 und die Flügel 56 am Zwischendeckel 5 so angeordnet und ausgebildet, dass sie bei bereits in das Gehäuse 4 eingesetztem Zwischendeckel 5 einander bei einem Aufsetzen des Schraubdeckels 41 auf den festen Gehäuseteil 42 vor deren Gewindeeingriff miteinander in Axialrichtung überlappen. Hierdurch wird sicher vermieden, dass sich während des Festschraubens des Schraubdeckels 41 dessen Unterkante 49 in Axialrichtung gesehen von oben her auf das obere Ende der Flügel 56 setzten kann, so dass auch hierdurch verursachte Verklemmungen beim Festdrehen des Schraubdeckels 41 vermieden werden. Vielmehr kann der Gewindeeingriff der Gewinde 43.1, 43.2 erst dann erfolgen, wenn die Verbindungsmittel 45 in Umfangsrichtung gesehen zwischen je zwei benachbarten Flügeln 56 des Schraubdeckels 5 liegen.

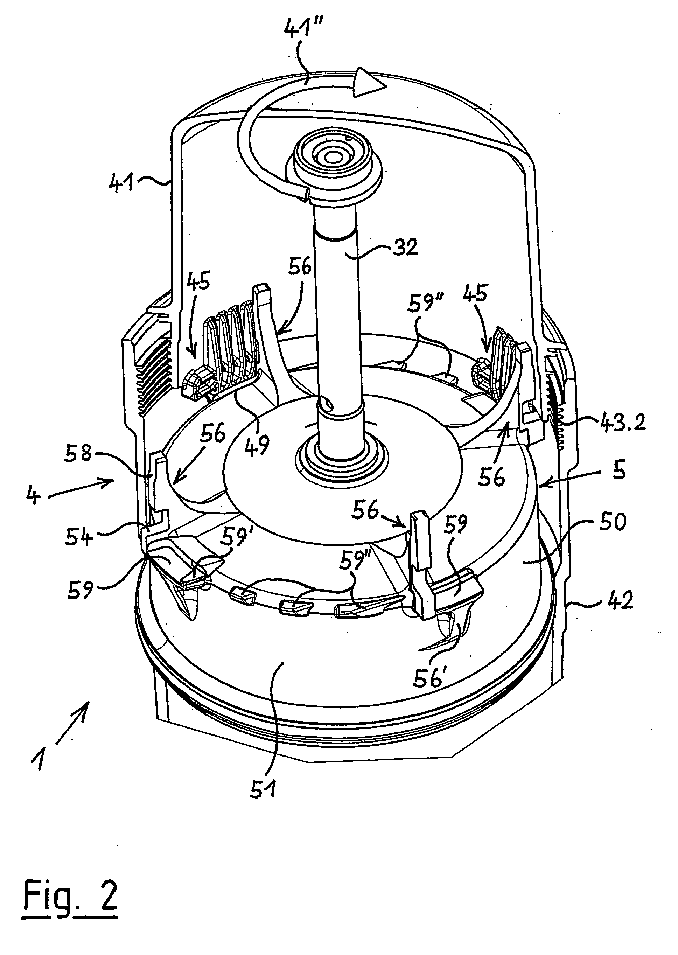

In Figur 2 ist die Vorrichtung 1 in einem Zustand gezeigt, in dem der Schraubdeckel 41 fest mit dem feststehenden Teil 42 des Gehäuses 4 verschraubt ist. Diese Stellung wird durch Verdrehen des Schraubdeckels 41 in dessen Festdrehrichtung 41" erreicht. Beim Festdrehen des Schraubdeckels 41 liegt jeweils die glatte Seite 45' der Rippenanordnungen 49' in Umfangsrichtung an den Flügeln 56 an. In dieser Stellung sind die Verbindungsmittel 45, 54 außer Eingriff, da beim Festdrehen des Schraubdeckels 41 eine Verdrehung dieser Verbindungsmittel 45, 54 relativ zueinander in der Weise erfolgt ist, dass kein Eingriff hergestellt wird oder dass ein zunächst bestehender Eingriff aufgehoben wird. In diesem Zustand können die Verbindungsmittel 45, 54 keine Kräfte in Axialrichtung übertragen, was beim Zusammenbauen und im zusammengebauten Zustand der Vorrichtung 1 auch nicht erforderlich ist.

Im zusammengebauten Zustand der Vorrichtung 1 steht der Schraubdeckel 41 mit seiner Unterkante 49 auf Stufen 59 auf, die in Losdrehrichtung unmittelbar neben den Flügeln 56 einstückig an den Zwischendeckel 5 angeformt sind und von diesem radial nach außen vorragen. Zwei einander gegenüberliegende von den hier vier Stufen 59 haben an ihrem in Losdrehrichtung weisenden Ende eine kleine nach oben vorragende Kante 59', die als Verdrehsicherung gegen ein selbsttätiges Verdrehen des Zwischendeckels 5 im zusammengebauten Zustand dienen. Damit der Schraubdeckel 41 bei seinem Festdrehen nicht an den Kanten 59' hängen bleibt, ist vor jeder Stufe 59 mit Kante 59' eine Gleitrampe 59'' an den Zwischendeckel 5 angeformt. Die Gleitrampen 59" bestehen hier aus je drei Rampenabschnitten, deren Abstände voneinander aber jeweils kleiner sind als die in Umfangsrichtung gemessene Länge der Unterkante 49 des Schraubdeckels 41 jeweils unterhalb seiner Rippen 49'.

Unter jeder Stufe 59 ist aus Stabilitätsgründen je eine die Stufe 59 unterstützende Rippe 56' einstückig an den Zwischendeckel 5 angeformt. Statt wie dargestellt, können die Verbindungsmittel 54 auf der Seite des Zwischendeckels 5 alternativ auch in oder an diesen Rippen 56' vorgesehen sein.

Die Figur 3 zeigt besonders deutlich die Anordnung von Zentrifuge 3 oben und Filtereinsatz 2 unten im Gehäuse 4. Das Gehäuse 4 ist mit dem feststehenden unteren Gehäuseteil 42 und dem damit über die Gewinde 43.1, 43.2 verbundenen, losdrehbaren Schraubdeckel 41 ausgeführt. Durch den Zwischendeckel 5 ist das Innere des Gehäuses 4 in den unteren Gehäusebereich 40, der den Filtereinsatz 2 aufnimmt, und den oberen Gehäusebereich 40', der die Zentrifuge 3 aufnimmt, unterteilt. Der glockenförmige Zwischendeckel 5 ist mit seinem gewölbten oberen Teil 50 sowie seinem sich daran nach unten anschließenden Umfangsbereich 51 teils in Ansicht, teils im Schnitt sichtbar. Unten an diesem Umfangsbereich 51 ist der Dichtring 51' in seine radial nach außen weisende Nut eingelegt, womit der Zwischendeckel 5 dichtend im unteren Teil 42 des Gehäuses 4 liegt.

An der Unterseite des oberen Teils 50 des Zwischendeckels 5 ist hier, einstückig mit dem Zwischendeckel 5, ein Zentrierring 53' angeordnet. Der Zentrierring 53' wirkt mit einem Rasthakenkranz 23, wie ihn viele gängige Filtereinsätze aufweisen, an der Oberseite der oberen Stirnscheibe 22 des Filtereinsatzes 2 zusammen und zentriert so den Filtereinsatz 2, ohne dass mittels des Kranzes 23 und des Zentrierrings 53' axiale Zugkräfte übertragen werden; die Teile 23 und 53' sind hier als reine Zentrierung gestaltet.

Die Zentrifuge 3 besitzt einen Zentrifugenrotor 31, der drehbar auf der Rotorachse 32 gelagert ist. Mit ihrem unteren Ende sitzt diese Rotorachse 32 in einer passenden zentralen Ausnehmung in der Oberseite des Zwischendeckels 5. Mit ihrem oberen Ende sitzt die Rotorachse 32 in einer passenden zentralen Ausnehmung an der Innenseite des Schraubdeckels 41.

Weiterhin sind auch hier die zwischen dem Schraubdeckel 41 und dem Zwischendeckel 5 vorgesehenen Verbindungsmittel 45, 54 sichtbar, die durch Verdrehen des Schraubdeckels 41 wahlweise in Eingriff und außer Eingriff bringbar sind. In dem in Figur 3 gezeigten Zustand der Vorrichtung 1 mit vollständig festgedrehtem Schraubdeckel 41 befinden sich die Verbindungsmittel 45, 54 außer Eingriff.

Im Betrieb der Vorrichtung 1 strömt zu reinigendes Schmieröl durch einen nicht sichtbaren Einlass zunächst in den unteren Gehäusebereich 40 und von dort radial von außen nach innen durch den Filterstoffkörper 21. Ein Teil des durch diesen Filterstoffkörper 21 geströmten Schmieröls gelangt nach oben in die Zentrifuge 3 und von dort nach dem Verlassen des Zentrifugenrotors 31 in den oberen Gehäusebereich 40'. Dieser Gehäusebereich 40' ist drucklos und über eine nicht gezeigte Rückführleitung mit dem Ölsumpf einer zugehörigen Brennkraftmaschine verbunden.

Im Gegensatz zu dem oberen Gehäusebereich 40' herrscht im Gehäusebereich 40 unterhalb des Schraubdeckels 5 der volle Öldruck. Um die durch diese Druckdifferenz erzeugte, in Axialrichtung nach oben auf den Zwischendeckel 5 wirkende Kraft aufzunehmen und abzuleiten, besitzt der Zwischendeckel 5 radial außen an seinem oberen Teil 50 nach außen vorspringende Stufen 59. Auf diesen Stufen 59 steht der Schraubdeckel 41 in seinem festgeschraubten Zustand mit seiner Unterkante 49 auf. Hierdurch wird der Zwischendeckel 5 in seiner Lage gesichert und kann die durch die Druckdifferenz auftretende Kraft problemlos aufnehmen und an den Schraubdeckel 41 übertragen. Von dort werden die axial nach oben wirkenden Kräfte großflächig über die Gewindeverbindung 43.1, 43.2 auf den feststehenden Teil 42 des Gehäuses 4 abgeleitet.

Figur 3a zeigt den in Figur 3 eingekreisten Bereich mit den außer Eingriff befindlichen Verbindungsmitteln 45, 54 in vergrößerter Darstellung. Ganz links ist der untere Teil eines der Flügel 56 mit der größtenteils durch den Schraubdeckel 41 verdeckten, das Verbindungsmittel 54 bildenden Ausnehmung erkennbar. Rechts davon liegt eines der Verbindungsmittel 45 des Schraubdeckels 41, das mit seiner glatten Seite 45', also ohne Eingriff, an dem benachbarten Flügel 56 anliegt. Der Haken 44 des Verbindungsmittels 45 liegt, nach rechts weisend, verdeckt am Innenumfang des Schraubdeckels 41.

Die Unterkante 49 des Schraubdeckels 41 steht auf der Stufe 59 des Zwischendeckels 5 auf. Die erhabene Kante 59' am rechten Ende der Stufe 59 hindert den Zwischendeckel 5 an selbsttätigen unerwünschten Drehbewegungen relativ zum festgedrehten Schraubdeckel 41.

Im oberen Teil der Figur 3a ist noch ein kleiner Teil des Schraubdeckels 41 mit seinem Gewinde 43.1 erkennbar. Unten in Figur 3a ist unter der Stufe 59 noch ein Abschnitt einer der Rippen 56' auf der Außenseite der Umfangswand 51 des Zwischendeckels 5 sichtbar.

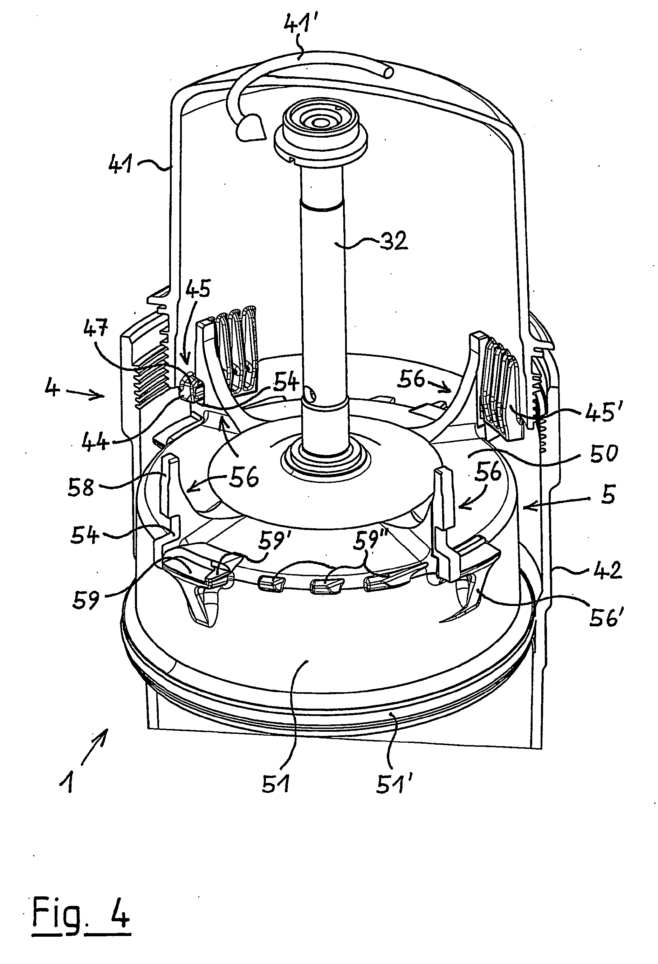

Figur 4 der Zeichnung zeigt in einer den Figuren 1 und 2 entsprechenden Darstellungsweise die Vorrichtung 1 nach einem Verdrehen des Schraubdeckels 41 um einige Umdrehungen in dessen Losdrehrichtung 41'. Durch diese Verdrehung des Schraubdeckels 41 gelangen die Haken 44 der Verbindungsmittel 45 am Schraubdeckel 41 in Eingriff mit den Verbindungsmitteln 54 am Zwischendeckel. Zwei von den vier Verbindungsmitteln 45 des Schraubdeckels 41 sind aufgrund von dessen weggebrochener Darstellung in Figur 4 nicht sichtbar, stehen aber im gleichen Verbindungseingriff mit den weiteren Verbindungsmitteln 54 des Zwischendeckels 5 wie die sichtbaren Verbindungsmittel 45.

Ausgehend vom festgedrehten Zustand des Schraubdeckels 41 wird bei dessen erster Vierteldrehung in Losdrehrichtung 41' lediglich der Schraubdeckel 41 bewegt; eine Verdrehung des Zwischendeckels 5 ist bis hierher noch nicht erfolgt. Bei der weiteren Verdrehung des Schraubdeckels 41 in Losdrehrichtung 41' treten dann die Haken 44 in die die Verbindungsmittel 54 bildenden Durchbrechungen in den Flügeln 56 ein, wodurch der Eingriff entsteht. Hieran ändert sich bei weiterer Verdrehung des Schraubdeckels 41 in dessen Losdrehrichtung 41' nichts mehr. Bei weiterem Verdrehen des Schraubdeckels 41 kommt dieser von dem festen Teil 42 des Gehäuses 4 frei. Aufgrund des Eingriffs der Verbindungsmittel 45, 54 zwischen Schraubdeckel 41 und Zwischendeckel 5 nimmt dabei der Schraubdeckel 41 die Zentrifuge 3 und den Zwischendeckel 5 mit nach oben. Dabei kann der Zwischendeckel 5 problemlos auch gegen ein Vakuum aus dem festen Gehäuseteil 42 herausgezogen werden.

Um zu vermeiden, dass hier das Lösen des Eingriffs zu leicht und dadurch ungewollt selbsttätig geschehen kann, sind die Haken 44 der der Verbindungsmittel 45 mit je einer nach oben weisenden Stufe 47 versehen. Diese Stufe 47 sorgt dafür, dass bei Ausübung einer Zugkraft in Axialrichtung der Eingriff sich nicht selbsttätig lösen kann. Für das Lösen des Eingriffs muss gezielt eine Verdrehbewegung erzeugt werden.

Nach dem Herausziehen der Baueinheit aus Schraubdeckel 41, Zentrifuge 3 und Zwischendeckel 5 aus dem Gehäuseteil 42 kann anschließend bei Bedarf der Filtereinsatzes 2 für sich einfach nach oben aus dem aus dem Gehäuseteil 42 herausgezogen werden.

Zur Trennung des Zwischendeckels 5 von dem Schraubdeckel 41 genügt eine kurze Verdrehung dieser beiden Teile gegeneinander entgegen der vorherigen Drehrichtung, wodurch die Verbindungsmittel 45, 54 außer Eingriff gelangen. Auf diese Weise kann zunächst der Schraubdeckel 41 von dem Zwischendeckel 5 in Axialrichtung entfernt werden. Hierdurch wird dann die Zentrifuge 3 für einen gegebenenfalls erforderlichen Austausch des Zentrifugenrotors 31 zugänglich.

Der Zusammenbau der einzelnen Teile der Vorrichtung 1 kann in umgekehrter Reihenfolge und mit umgekehrter Drehrichtung erfolgen, um zunächst den Filtereinsatz 2 für sich in den Gehäuseteil 42 einzubauen und dann eine vormontierte Einheit aus Schraubdeckel 41, Zentrifuge 3 und Zwischendeckel 5 zu bilden, die dann gemeinsam mit dem Gehäuseteil 42 verbindbar ist.

Um Schwierigkeiten bei der Einführung des oberen Endes der Rotorachse 32 in die zugehörige Ausnehmung im Schraubdeckel 41 zu vermeiden, besitzt jeder Flügel 56 radial außen eine in Axialrichtung verlaufende Führungskontur 58, die mit einem geringen Bewegungsspiel in das Innere des unteren Teils des Schraubdeckels 41 passt. Durch diese Führungskontur 58 wird sichergestellt, dass beim Zusammenfügen von Zwischendeckel 5 und Schraubdeckel 41 mit der dazwischen angeordneten Zentrifuge 3 keine Verkantungen auftreten. Vielmehr wird das Zusammenfügen mit exakt axialer Ausrichtung zwangsläufig hergestellt, wofür die Führungskontur 58 sorgt. Damit wird gleichzeitig gewährleistet, dass das obere Ende der Rotorachse 32 immer zielgenau in die zugehörige Ausnehmung an der Innenseite des Schraubdeckels 41 gelangt.

Alternativ können der Filtereinsatz 2, der Zwischendeckel 5 und die Zentrifuge 3 auch einzeln nacheinander in den Gehäuseteil 42 eingesetzt werden und es kann dann der Schraubdeckel 41 mit dem Gehäuseteil 42 verschraubt werden.

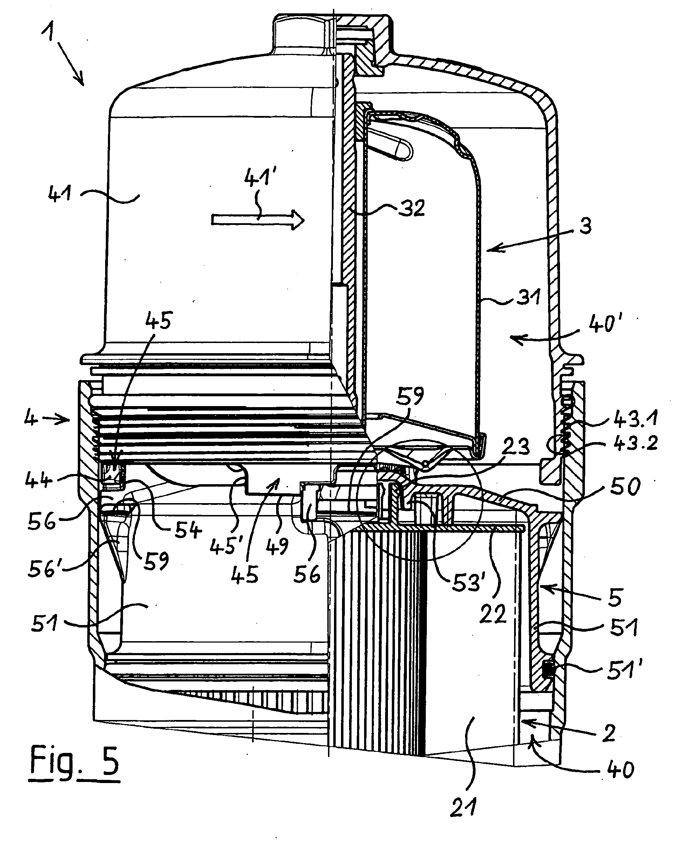

Figur 5 zeigt die Vorrichtung 1 in dem schon in Figur 4 gezeigten Verdrehzustand des Schraubdeckels 41, in gleichen Darstellungsweise wie in Figur 3. Figur 5 verdeutlicht, dass der Schraubdeckel 41 gegenüber der Position in Figur 3 nun um einige Umdrehungen in Losdrehrichtung 41' verdreht ist. Bei dieser Verdrehung wird über die erste Vierteldrehung allein der Schraubdeckel 41 verdreht, da dessen Verdrehung sich noch nicht auf den Zwischendeckel 5 übertragen hat.

Aufgrund der weiteren Verdrehung des Schraubdeckels 41 über die erste Vierteldrehung hinaus nimmt dieser den Zwischendeckel 5 infolge eines Einlaufens der Haken 44 in die Verbindungsmittel 54 in Losdrehrichtung mit. Dadurch dreht sich der Zwischendeckel 5 nun beim weiteren Losdrehen des Schraubdeckels 41 mit und bewegt sich aufgrund des Eingriffs der Verbindungsmittel 45, 54 mit nach oben.

Relativ zum Filtereinsatz 2 kann sich dabei der Zwischendeckel 5 aufgrund der Drehfreiheit der Zentrierungsmittel 23, 53' frei drehen und nach oben vom Filtereinsatz 2 weg bewegen.

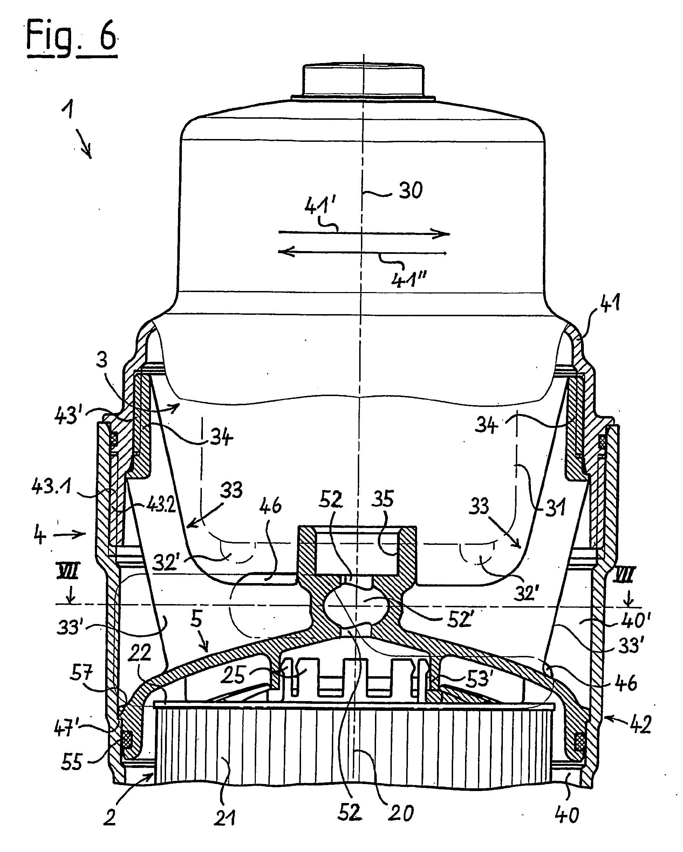

Die Figur 6 der Zeichnung zeigt eine zweite Ausführung einer Vorrichtung 1 zum Abtrennen von Verunreinigungen aus dem Schmieröl einer Brennkraftmaschine. Die Vorrichtung 1 umfasst als wesentliche Teile in ihrem unteren Bereich einen Filtereinsatz 2 und in ihrem oberen Bereich eine Zentrifuge 3. Von dem Filtereinsatz 2 ist nur der obere Endbereich sichtbar. Der Filtereinsatz 2 und die Zentrifuge 3 sind in einem gemeinsamen Gehäuse 4 übereinander angeordnet, wobei das Gehäuse 4 einen Schraubdeckel 41 und einen unteren, festen Gehäuseteil 42 umfasst. Der untere Gehäuseteil 42 besitzt an seinem oberen Ende ein Innengewinde 43.2; der Schraubdeckel 41 besitzt an seinem unteren Ende ein Außengewinde 43.1. Mittels dieser beiden Gewinde 43.1 und 43.2 sind der Schraubdeckel 41 und der untere Gehäuseteil 42 dichtend miteinander verschraubt, wie in Figur 6 dargestellt. Für Wartungszwecke, insbesondere zum Austauschen des Filtereinsatzes 2 und/ oder eines Rotors 31 der Zentrifuge 3, kann der Schraubdeckel 41 vom unteren Gehäuseteil 42 abgeschraubt werden. Im Einsatz der Vorrichtung 1 ist diese mittels des unteren Gehäuseteils 42 in hier nicht dargestellter Art und Weise mit einer Brennkraftmaschine, insbesondere deren Motorblock, verbunden.

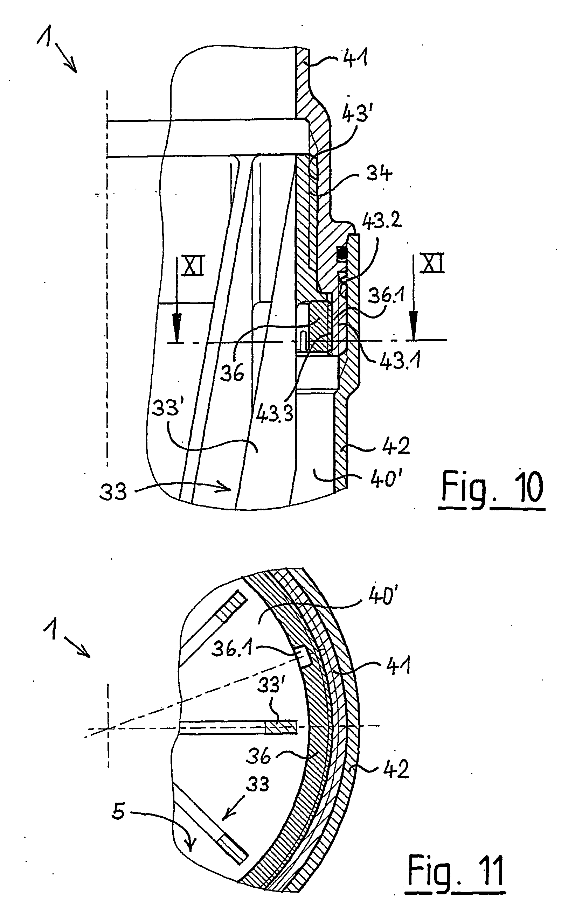

Die im Schraubdeckel 41 des Gehäuses 4 untergebrachte Zentrifuge 3 umfasst neben dem Rotor 31 einen Zentrifugenboden 33, der sternförmig mit mehreren flachen Armen 33' ausgebildet ist. An seinem oberen, äußeren Bereich besitzt der Zentrifugenboden 33 einen ringförmigen Abschluss mit einem Außengewinde 34, das in ein passendes Gegen-Innengewinde 43' am Innenumfang des Schraubdeckels 41 eingeschraubt ist. Ein ungewolltes Losdrehen des Zentrifugenbodens 33 aus dem Schraubdeckel 41 kann durch eine separate, bei Bedarf lösbare Losdrehsicherung (vergleiche Figur 10 und 11) unterbunden werden.

Im Zentrum des Zentrifugenbodens 33 befindet sich eine Lageraufnahme 35 für ein hier nicht eingezeichnetes unteres Drehlager des Zentrifugenrotors 31. Ein zweites, oberes Drehlager des Zentrifugenrotors 31 befindet sich oben im Zentrum des Schraubdeckels 41 und ist durch diesen verdeckt.

Dadurch, dass der Zentrifugenboden 33 in den Schraubdeckel 41 eingeschraubt ist, wird die Position der Lageraufnahme 35 und damit die Position der Drehachse 30 des Zentrifugenrotors 31 nur durch die Toleranz der Gewindeverbindung mit den Gewinden 34 und 43' bestimmt. Hierdurch wird eine sehr genaue Positionierung der Lageraufnahme 35 und damit des unteren Lagers des Zentrifugenrotors 31 gewährleistet, so dass dieser sehr reibungsarm gelagert wird.

Im unteren Gehäuseteil 42 ist der Filtereinsatz 2 angeordnet. Über dem Filtereinsatz 2 liegt ein Zwischendeckel 5, der einen unteren Raum 40 des Gehäuses 4, in dem der Filtereinsatz 2 liegt, und einen oberen Raum 40' des Filtergehäuses 4 für die Zentrifuge 3 voneinander trennt. Bei dem in Figur 6 gezeigten Ausführungsbeispiel der Vorrichtung 1 sind der Zentrifugenboden 33 und der Zwischendeckel 5 zu einem einstückigen Bauteil zusammengefasst. An seinem Außenumfang besitzt der Zwischendeckel 5 eine Radialdichtung 55, die für die gewünschte schmieröldichte Trennung von unterem Raum 40 und oberem Raum 40' des Gehäuses 4 sorgt. Oberhalb der Radialdichtung 55 ist der Zwischendeckel 5 mit seinem Außenumfang über einen radial nach außen vorspringenden Vorsprung 57 auf einer nach oben weisenden Stufe 47' am Innenumfang des unteren Gehäuseteils 42 abgestützt, so dass die Position des Zwischendeckels 5 in Axialrichtung fixiert ist.

An seiner Unterseite besitzt der Zwischendeckel 5 hier einen Zentrierring 53', der mit einem passend angeordneten Kranz 25 von Armen zusammenwirkt, die von einer oberen Stirnscheibe 22 des Filtereinsatzes 2 aufragen. Hiermit wird der Filtereinsatz 2 relativ zum Zwischendeckel 5 zentriert; axiale Zugkräfte übertragen die Zentriermittel 25 und 53' hier nicht.

Der Filtereinsatz 2 besteht, wie üblich, aus einem zickzackförmig gefalteten, zu einem Hohlzylinder gebogenen Filterstoffkörper 21, der unten und oben mit je einer Stirnscheibe 22 abgedeckt ist.

Die Axialrichtung 20 des Filtereinsatzes 2 fluchtet hier mit der Axialrichtung 30 der Zentrifuge 3.

Zur Zuführung von Schmieröl zum Rotor 31 der Zentrifuge 3 dient eine Durchlassöffnung 52 im Zentrum des Zwischendeckels 5. Durch diese Durchlassöffnung 52 gelangt unter Druck stehendes Schmieröl zum hier nicht sichtbaren Einlass des Zentrifugenrotors 31. Durch zwei oder mehr Rückstrahldüsen 32' strömt das Schmieröl aus dem Zentrifugenrotor 31 aus und versetzt diesen in eine Rotation um die Achse 30. Das aus den Rückstrahldüsen 32' austretende Schmieröl strömt drucklos unter Schwerkraftwirkung zwischen den Armen 33' des Zentrifugenbodens 33 nach unten hin ab und gelangt durch einen hier nur zu einem geringen Teil sichtbaren Ableitungskanal 46 beispielsweise in den Ölsumpf der zugehörigen Brennkraftmaschine. Damit die Schmierölversorgung der Brennkraftmaschine mit Priorität vor einer Ölreinigung durch die Zentrifuge 3 gewährleistet bleibt, kann in einer quer zur Durchlassöffnung 52 verlaufenden Aussparung 52' ein Ventil angeordnet sein, das eine Ölzuführung zur Zentrifuge 3 erst freigibt, wenn ein vorgegebener Mindest-Schmieröldruck im Bereich des Filtereinsatzes 2 überschritten wird.

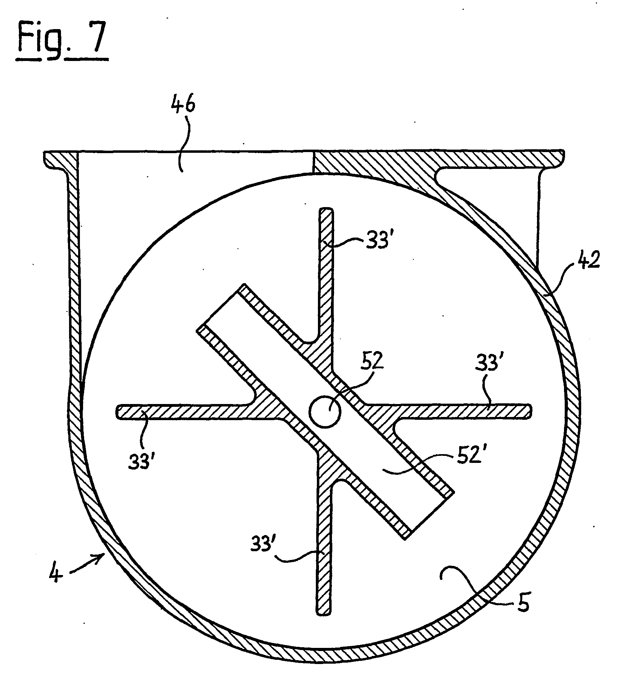

Figur 7 der Zeichnung zeigt die Vorrichtung 1 aus Figur 6 im Querschnitt entlang der Linie VII -VII in Figur 6. Dabei verdeutlicht die Figur 7 besonders, dass das Gehäuse 4 der Vorrichtung 1 im Wesentlichen einen kreisrunden Querschnitt aufweist. Oben links in Figur 7 ist ein Teil des Schmieröl-Ableitungskanals 46 erkennbar, der z.B. zum Ölsumpf der Brennkraftmaschine führt.

Im Zentrum der Figur 7 ist die Durchlassöffnung 52 erkennbar. Quer zu dieser Durchlassöffnung 52 erstreckt sich die hohlzylindrische Aussparung 52', die zur Aufnahme des vorstehend erwähnten Ventils dient, das die Schmierölzuführung zur Zentrifuge 3 erst nach Überschreiten eines bestimmten Mindest-Schmieröldrucks freigibt. Nach links, rechts, oben und unten erstrecken sich die Arme 33' des Zentrifugenbodens 33 in Radialrichtung von innen nach außen. Hier wird deutlich sichtbar, dass ein sehr großer Strömungsquerschnitt für das drucklos abströmende Schmieröl nach dessen Austritt aus dem Rotor 31 der Zentrifuge 3 vorliegt, so dass ein rasches Abströmen des Schmieröls allein unter Schwerkraftwirkung gewährleistet ist.

Im Hintergrund liegt innerhalb des unteren Gehäuseteils 42 der Zwischendeckel 5.

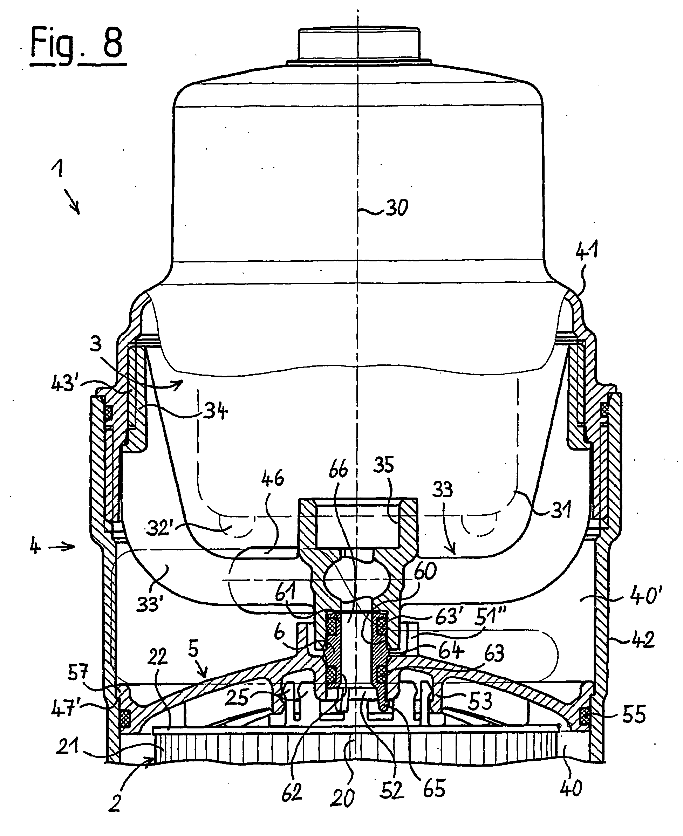

Die Vorrichtung 1 in der Ausführung gemäß Figur 8 dient ebenfalls zum Abtrennen von Verunreinigungen aus dem Schmieröl einer Brennkraftmaschine. Auch diese Vorrichtung 1 umfasst als wesentliche Teile in ihrem unteren Bereich einen Filtereinsatz 2 und in ihrem oberen Bereich eine Zentrifuge 3. Von dem Filtereinsatz 2 ist nur der obere Endbereich dargestellt. Der Filtereinsatz 2 und die Zentrifuge 3 sind auch hier in einem gemeinsamen Gehäuse 4 übereinander angeordnet, wobei das Gehäuse 4 oben einen Schraubdeckel 41 und unten einen festen Gehäuseteil 42 umfasst. Der Schraubdeckel 41 und der Gehäuseteil 42 sind, wie weiter oben schon beschrieben, mittels je eines Schraubgewindes dichtend miteinander verschraubt. Für Wartungszwecke kann der Schraubdeckel 41 vom unteren, mit einer zugehörigen, nicht dargestellten Brennkraftmaschine verbundenen Gehäuseteil 42 abgeschraubt werden.

Im Inneren des Gehäuses 4 ist oberhalb des Filtereinsatzes 2 auch hier ein Zwischendeckel 5 angeordnet, der in den unteren Gehäuseteil 42 eingesteckt ist. An seiner Unterseite besitzt der Zwischendeckel 5 hier, anders als bei der Vorrichtung nach den Figuren 6 und 7, einen nach unten vorragenden Rastkragen 53, der in Eingriff mit nach oben vorstehenden Rastarmen 25 einer oberen Stirnscheibe 22 des Filtereinsatzes 2 steht. Aufgrund des zusätzlichen Eingriffs dieser Rastverbindungsmittel 25 und 53 zwischen Zwischendeckel 5 und Filtereinsatz 2 nimmt der Schraubdeckel 41 bei seinem Losdrehen hier nicht nur die Zentrifuge 3, den Zentrifugenboden 33 und den Zwischendeckel 5 sondern auch den Filtereinsatz 2 mit nach oben. Nach dem Herausziehen dieser Baueinheit aus dem Gehäuseteil 42 kann das Trennen des Filtereinsatzes 2 von dem Zwischendeckel 5 einfach durch Lösen der Verbindungsmittel 25, 53 erfolgen, wonach der Filtereinsatz 2 in Axialrichtung nach unten aus dem Zwischendeckel 5 herausgezogen werden kann.

An ihrer Unterseite ist die obere Stirnscheibe 22 flüssigkeitsdicht mit einem Filterstoffkörper 21 in bekannter Art und Weise verbunden.

In seinem Zentrum besitzt der Zwischendeckel 5 eine Durchlassöffnung 52, die als Ölkanal zur Überleitung von Öl aus dem unteren Raum 40 des Gehäuses 4 nach oben zur Zentrifuge 3 dient.

In die Durchbrechung 52 ist hier ein Adapterstück 6 eingesetzt, das in Axialrichtung einen Hohlkanal 66 bildet, der eine Fortsetzung des Ölkanals 52 darstellt. Über etwa die Hälfte seiner Höhe sitzt das Adapterstück 6 mit seinem unteren Teil 62 im Zwischendeckel 5 und ist in dessen zentraler Durchlassöffnung 53 festgelegt. Zur Festlegung des Adapterstücks 6 dienen mehrere von dessen Unterseite nach unten vorragende federnde Rastarme 65 mit nach außen weisenden Rastnasen. Mit den Rastarmen 65 voran kann das Adapterstück 6 von oben her in die zentrale Durchlassöffnung 53 des Zwischendeckels 5 eingesteckt werden und rastet dann nach dem Ausfedern der Rastarme 65 darin ein. Ein etwa in der Mitte der Höhe des Adapterstücks 6 vorgesehener, nach außen vorspringender kleiner Kragen 64 dient dabei als Einschubbegrenzung oder -anschlag.

Um das Adapterstück 6 herum verläuft ein als Teil des Zwischendeckels 5 ausgeführter Kragen 51''.

Der obere Teil 61 des Adapterstücks 6 besitzt an seinem Außenumfang 60 eine ballige Kontur, wodurch erreicht wird, dass ein auf dem Adapterstück 6 sitzender Zentrifugenboden 33 relativ zum Adapterstück 6 begrenzt verschwenkbar ist. Hiermit besteht die Möglichkeit, die Mittelachse 30 der Zentrifuge 3 relativ zur Mittelachse 20 des Filtereinsatzes 2 und des Zwischendeckels 5 zwecks Toleranzausgleichs zu verschwenken. Dabei bleiben ein sicherer axialer Zusammenhalt und die sichere Abdichtung des Adapterstücks 6 über seine Dichtringe 63, 63' sowohl gegen den Zwischendeckel 5 als auch gegen den Zentrifugenboden 33 erhalten.

Ergänzend kann auch der untere Teil 62 des Adapterstücks 6 an seinem Außenumfang eine ballige Kontur aufweisen, so dass dann auch das Adapterstück 6 relativ zum Zwischendeckel 5 in gewissem Maße verschwenkbar wird, falls dies zum Toleränzausgleich erforderlich ist.

Der Zentrifugenboden 33 hat, ausgehend von seinem mittleren, auf das Adapterstück 6 aufgesetzten Teil, die Form von mehreren nach außen und oben verlaufenden Armen 33', die zwischen sich ausreichend große Strömungsquerschnitte für aus der Zentrifuge 3 abfließendes Schmieröl freilassen. Oberhalb des Zwischendeckels 5 ist im rechten Teil des Inneren des Gehäuses 4 ein Ölableitungskanal 46 erkennbar, durch den das in der Zentrifuge 3 gereinigte Schmieröl drucklos abfließt, beispielsweise in den Ölsumpf der zugehörigen Brennkraftmaschine.

Die Zentrifuge 3 ist auch hier von an sich bekannter Bauart mit einem Zentrifugenrotor 31, an dessen Boden zwei Rückstrahldüsen 32' vorgesehen sind. Die Zuführung des Schmieröls zur Zentrifuge 3 erfolgt durch die zentrale Durchlassöffnung 52 und das hohle Innere 66 des Adapterstücks 6 in das Innere des Zentrifugenrotors 31. Das untere Lager des Zentrifugenrotors 31, das hier nicht eigens eingezeichnet ist, wird in einer Lageraufnahme 35 aufgenommen, die ein Teil des Zentrifugenbodens 33 ist und die oberhalb des Adapterstücks 6 im Abstand von diesem liegt.

Der Schraubdeckel 41 bildet zugleich den äußeren Teil der Zentrifuge 3. Um den Zentrifugenrotor 31 für Wartungszwecke aus der Zentrifuge 3 entnehmen zu können, wird ,zunächst der Schraubdeckel 41 des Gehäuses 4 von dessen unterem Teil 42 abgeschraubt. Dabei wird der Zentrifugenboden 33, der über ein Außengewinde 34 in ein Innengewinde 43' in den Schraubdeckel 41 eingeschraubt ist, mit aus dem unteren Gehäuseteil 42 herausbewegt. Über das Adapterstück 6 wird dabei in ausreichendem Maße eine axiale Zugkraft übertragen, um auch den Zwischenboden 5 und den damit verrasteten Filtereinsatz 2 beim Abschrauben des Schraubdeckels 41 aus dem unteren Gehäuseteil 42 herauszuziehen. Der Filtereinsatz 2 ist dann unmittelbar zugänglich; nach Abschrauben des Zentrifugenbodens 33 vom Schraubdeckel 41 kann auch ein verbrauchter Zentrifugenrotor 31 ersetzt werden.

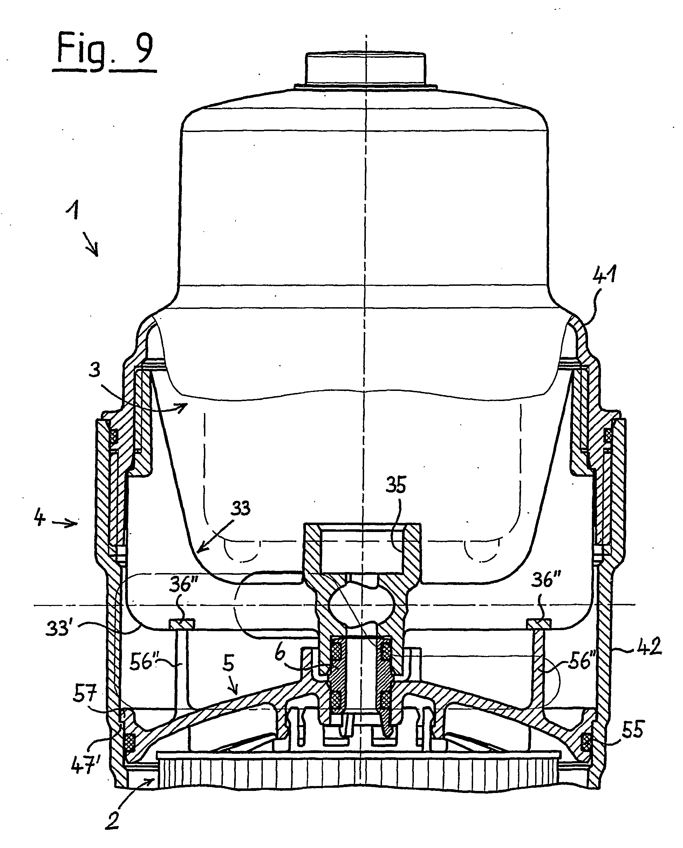

Das Ausführungsbeispiel der Vorrichtung 1 gemäß Figur 9 stimmt in weiten Teilen mit der Vorrichtung 1 gemäß Figur 8 überein. Auch bei der Vorrichtung 1 nach Figur 9 ist der Zwischendeckel 5 in den unteren Gehäuseteil 42 eingesteckt. Auch hier erfolgt die Abdichtung mittels eines umlaufenden Dichtringes 55 am äußeren Umfang des Zwischendeckels 5. Um den Zwischendeckel 5 in geschlossenem Zustand des Gehäuses 4 besonders sicher in seiner Lage zu arretieren, besitzt der Zwischendeckel 5 hier an seiner Oberseite einen Kranz von nach oben hin vorstehenden Abstützstegen 56''. In einer passend gegenüberliegenden Position ist an dem Zentrifugenboden 33 ein umlaufender Abstützring 36" vorgesehen, dessen Unterseite mit der Oberkante der Abstützstege 56'' in Anlage steht, wenn die Vorrichtung 1 zusammengebaut ist. Damit kann der Zwischendeckel 5 seine vorgesehene Lage nicht mehr verlassen.

Hinsichtlich der weiteren Einzelteile in Figur 9 wird auf die Beschreibung der Figur 8 verwiesen.

Figur 10 der Zeichnung zeigt in einen Teil-Längsschnitt eine fünfte Ausführung der Vorrichtung 1, die in wesentlichen Teilen mit den Vorrichtungen 1 gemäß den Figuren 6 bis 9 übereinstimmt. Zusätzlich ist bei der Ausführung der Vorrichtung 1 gemäß Figur 10 ein Mittel zur Sicherung der Schraubverbindung zwischen dem Zentrifugenboden 33 und dem Schraubdeckel 41 vorgesehen.

Wie weiter oben schon erläutert, besitzt der Zentrifugenboden 33, der mehrere Arme 33' umfasst, in seinem oberen Endbereich einen umlaufenden, ringförmigen Teil, der mit einem Außengewinde 34 versehen ist. Mittels dieses Außengewindes 34 ist der Zentrifugenboden 33 in ein passendes Gegen-Innengewinde 43' im Schraubdeckel 41 eingeschraubt. Um sicherzustellen, dass sich diese Schraubverbindung 34, 43' nicht ungewollt lösen kann, ist hier als lösbare Losdrehsicherung ein Konterring 36 vorgesehen.

Der Konterring 36 besitzt auf seinem Außenumfang ein Außengewinde 36.1. Unterhalb des Innengewindes 43' ist im Schraubdeckel 41 ein zweites, im Durchmesser weiteres Innengewinde 43.3 vorgesehen, das zu dem Gewinde 36.1 passt und in das der Konterring 36 von unten her eingeschraubt ist, nachdem der Zentrifugenboden 33 zuvor mit dem Schraubdeckel 41 verschraubt wurde. Der Konterring 36 sorgt dafür, dass im Betrieb der Vorrichtung 1 und beim Losdrehen des Schraubdeckels 41 oder bei dessen Festdrehen die Schraubverbindung 34, 43' zwischen dem Zentrifugenboden 33 und dem Schraubdeckel 41 immer gegen ungewolltes Lösen gesichert bleibt. Nur bei abgeschraubtem Schraubdeckel 41 kann der Konterring 36 gelöst werden, wonach dann der Zentrifugenboden 33 aus dem Schraubdeckel 41 herausgeschraubt werden kann.

Die Figur 11 zeigt schließlich in einem Teil-Querschnitt den Ausschnitt aus der Vorrichtung 1 aus Figur 10 gemäß der Schnittlinie XI-XI. Ganz rechts wird in Radialrichtung von außen nach innen gesehen zunächst der untere, feste Gehäuseteil 42 der Vorrichtung 1 geschnitten. Danach folgt der Schraubdeckel 41 und radial noch weiter innen schließlich der Konterring 36, wobei die drei genannten Teile, wie oben anhand der Figur 10 erläutert, miteinander verschraubt sind.

An seinen Innenumfang besitzt der Konterring 36 wenigstens zwei in Radialrichtung nach innen und in Axialrichtung nach unten offene Ausnehmungen 36.1, die zum Ansetzen und Eingreifen eines Schraubwerkzeuges zum Festdrehen und Lösen des Konterrings 36 dienen. Der Konterring 36 ist bei allen Vorrichtungen 1 gemäß den Figuren 6 bis 9 verwendbar.

Im Inneren 40' des Schraubdeckels 41 und Gehäuseteils 42 sind in Figur 11 einige der Arme 33' des Zentrifugenbodens 33 sichtbar. Im Hintergrund liegt in Figur 11 im Inneren 40' des Gehäuseteils 42 der Zwischendeckel 5.

## Patentansprüche

1. Vorrichtung (1) zum Abtrennen von Verunreinigungen aus dem Schmieröl einer Brennkraftmaschine, wobei die Vorrichtung (1) unten einen Filtereinsatz (2) und darüber eine Zentrifuge (3) mit einem mittels durchströmenden Schmieröls antreibbaren Rotor (31) aufweist, wobei der Filtereinsatz (2) und die Zentrifuge (3) übereinander in einem gemeinsamen, im Betrieb der Vorrichtung (1) verschlossenen, zweiteiligen Gehäuse (4) mit einem abnehmbaren oberen Schraubdeckel (41) und einem festen unteren Gehäuseteil (42) angeordnet sind, wobei in dem Gehäuse (4) zwischen Filtereinsatz (2) und Zentrifuge (3) ein herausnehmbarer Zwischendeckel (5) angeordnet ist und wobei aus dem Gehäuse (4) in dessen geöffnetem Zustand die Zentrifuge (3), der Zwischendeckel (5) und der Filtereinsatz (2) herausnehmbar sind,
**dadurch gekennzeichnet,**
- **dass** nur der Schraubdeckel (41) und der Zwischendeckel (5) miteinander in Eingriff bringbare, lösbare Verbindungsmittel (45, 54; 34, 43') zur Übertragung axialer Zugkräfte oder axialer Zug- und Druckkräfte aufweisen und
- **dass** in Beziehung zueinander der Zwischendeckel
(5) und der Filtereinsatz (2) unverbundene Einzelteile der Vorrichtung (1) sind und der Zwischendeckel (5) und/oder der Filtereinsatz (2) verbindungsmittelfrei ausgeführt sind/ist.

2. Vorrichtung nach Anspruch 1, **dadurch gekennzeichnet, dass** die Verbindungsmittel (45, 54; 34, 43') durch Verdrehen des Schraubdeckels (41) in seiner Losdrehrichtung (41') relativ zum Zwischendeckel (5) in Eingriff und durch Verdrehen des Schraubdeckels (41) in seiner Festdrehrichtung (41'') relativ zum Zwischendeckel (5) außer Eingriff bringbar sind.

3. Vorrichtung nach Anspruch 1 oder 2, **dadurch gekennzeichnet, dass** die als Drehverbindungsmittel gestalteten Verbindungsmittel (45, 54) von Schraubdeckel (41) und Zwischendeckel (5) bajonettverschlüssartig oder als Kurzgewinde ausgeführt sind.

4. Vorrichtung nach Anspruch 2 oder 3, **dadurch gekennzeichnet, dass** der Zwischendeckel (5) Glockenform hat und auf seinem Außenumfang axial verlaufende Rippen (56') aufweist, die jeweils mit mindestens einer in Umfangsrichtung weisenden Verbreiterung oder Durchbrechung als Verbindungsmittel (54) ausgebildet sind, und dass der Schraubdeckel (41) an seinem unteren Rand in seiner Losdrehrichtung (41') weisende Haken (44) oder Nasen als Verbindungsmittel (45) aufweist, die mit den Verbreiterungen oder Durchbrechungen (54) durch Verdrehen des Schraubdeckels (41) in seiner Losdrehrichtung (41') relativ zum Zwischendeckel (5) in Eingriff und durch Verdrehen des Schraubdeckels (41) in seiner Festdrehrichtung (41'') relativ zum Zwischendeckel (5) außer Eingriff bringbar sind.

5. Vorrichtung nach Anspruch 4, **dadurch gekennzeichnet, dass** die die Verbreiterungen oder Durchbrechungen (54) aufweisenden Rippen (56') zugleich als Stabilisierungs- und Kraftableitungsrippen zur Versteifung des Zwischendeckels (5) und zur Ableitung von durch einen Öldruck im Inneren des Gehäuses (4) unterhalb des Zwischendeckels (5) hervorgerufenen Kräften auf den Schraubdeckel (41) dienen.

6. Vorrichtung nach Anspruch 2 oder 3, **dadurch gekennzeichnet, dass** der Zwischendeckel (5) Glockenform hat und radial außen auf seiner Oberseite mehrere axial nach oben weisende, in Umfangsrichtung voneinander beabstandete Flügel (56) aufweist, die jeweils mit mindestens einer in Umfangsrichtung weisenden Verbreiterung oder Durchbrechung oder einer radial nach innen einspringenden Eintiefung als Verbindungsmittel (54) ausgebildet sind, und dass der Schraubdeckel (41) an seinem unteren Rand in seiner Losdrehrichtung (41') oder radial nach innen weisende Haken (44) oder Nasen als Verbindungsmittel (45) aufweist, die mit den Verbindungsmitteln (54) des Zwischendeckels (5) durch Verdrehen des Schraubdeckels (41) in seiner Losdrehrichtung (41') relativ zum Zwischendeckel (5) in Eingriff und durch Verdrehen des Schraubdeckels (41) in seiner Festdrehrichtung (41") relativ zum Zwischendeckel (5) außer Eingriff bringbar sind.

7. Vorrichtung nach Anspruch 6, **dadurch gekennzeichnet, dass** die Verbindungsmittel (45) des Schraubdeckels (41) einerseits und die Flügel (56) mit den Verbindungsmitteln (54) des Zwischendeckels (5) andererseits so angeordnet und ausgebildet sind, dass sie bei bereits in das Gehäuse (4) eingesetztem Zwischendeckel (5) einander bei einem Aufsetzen des Schraubdeckels (41) auf den festen Gehäuseteil (42) vor deren Gewindeeingriff miteinander in Axialrichtung überlappen.

8. Vorrichtung nach Anspruch 6 oder 7, **dadurch gekennzeichnet, dass** die Flügel (56) radial außen eine mit Bewegungsspiel in das Innere des Schraubdeckels (41) passende Führungskontur (58) haben.

9. Vorrichtung nach einem der Ansprüche 6 bis 8, **dadurch gekennzeichnet, dass** an oder neben den Flügeln (56) je eine vom Zwischendeckel (5) radial nach außen vorspringende Stufe (59) vorgesehen ist, auf denen im festgeschraubten Zustand des Schraubdeckels (41) jeweils ein Abschnitt von dessen Unterkante (49) aufsteht.

10. Vorrichtung nach Anspruch 9, **dadurch gekennzeichnet, dass** zumindest ein Teil der Stufen (59) an seinem in Losdrehrichtung (41') des Schraubdeckels (41) weisenden Ende je eine nach oben vorragende Kante (59') aufweist.

11. Vorrichtung nach Anspruch 10, **dadurch gekennzeichnet, dass** in Festdrehrichtung (41'') des Schraubdeckels (41) gesehen vor zumindest den eine Kante (59') aufweisenden Stufen (59) am Zwischendeckel (5) je eine in Höhe der Kante (59') liegende, stetige oder unterbrochene Gleitrampe (59'') für die Unterkante (49) des Schraubdeckels (41) vorgesehen ist.

12. Vorrichtung nach einem der Ansprüche 6 bis 11, **dadurch gekennzeichnet, dass** die Flügel (56) über einen durchgehenden, umlaufenden Kragen miteinander verbunden oder zu einem durchgehenden, umlaufenden Kragen zusammengefasst sind.

13. Vorrichtung nach einem der Ansprüche 4 bis 12, **dadurch gekennzeichnet, dass** die Verbreiterungen oder Durchbrechungen (54) einerseits und/oder die Haken (44) oder Nasen andererseits an ihren in Eingriff miteinander tretenden Flächen mit einer die Eingriffsstellung sichernden Schräge oder Stufe (47) ausgebildet sind.

14. Vorrichtung nach einem der vorhergehenden Ansprüche, **dadurch gekennzeichnet, dass** der Schraubdeckel (41) zumindest im Bereich seiner Verbindungsmittel (45) an seinem Innenumfang mit Verstärkungsrippen (49') ausgebildet ist

15. Vorrichtung nach einem der vorangehenden Ansprüche, **dadurch gekennzeichnet, dass** der Schraubdeckel (41) und/oder der Zwischendeckel (5) jeweils einstückige Spritzgussteile aus Kunststoff sind.

16. Vorrichtung nach einem der vorangehenden Ansprüche, **dadurch gekennzeichnet, dass** der Schraubdeckel (41) und/oder der Zwischendeckel (5) jeweils einstückige Druckgussteile aus Leichtmetall sind.

17. Vorrichtung (1) zum Abtrennen von Verunreinigungen aus dem Schmieröl einer Brennkraftmaschine, wobei die Vorrichtung (1) unten einen Filtereinsatz (2) und darüber eine Zentrifuge (3) mit einem mittels durchströmenden Schmieröls antreibbaren Rotor (31) aufweist, wobei der Filtereinsatz (2) und die Zentrifuge (3) übereinander in einem gemeinsamen, im Betrieb der Vorrichtung (1) verschlossenen, zweiteiligen Gehäuse (4) mit einem abnehmbaren oberen Schraubdeckel (41) und einem festen unteren Gehäuseteil (42) angeordnet sind, wobei in dem Gehäuse (4) zwischen Filtereinsatz (2) und Zentrifuge (3) ein herausnehmbarer Zwischendeckel (5) angeordnet ist und wobei aus dem Gehäuse (4) in dessen geöffnetem Zustand die Zentrifuge (3), der Zwischendeckel (5) und der Filtereinsatz (2) herausnehmbar sind,
**dadurch gekennzeichnet,**
- **dass** der Schraubdeckel (41) und der Zwischendeckel (5) miteinander in Eingriff bringbare, lösbare Verbindungsmittel (45, 54; 34, 43') zur Übertragung axialer Zugkräfte oder axialer Zug- und Druckkräfte aufweisen,
- **dass** die Vorrichtung (1) mit einem durchbrochenen, einen Durchfluss von aus dem Rotor (31) austretenden Schmieröl gestattenden, einen Teil des Zwischendeckels (5) bildenden Zentrifugenboden (33) ausgeführt ist,
- **dass** der Zentrifugenboden (33) in seinem Zentrum eine Aufnahme (35) für ein unteres Drehlager oder unteres Achsende des Rotors (31) aufweist und
- **dass** der Zentrifugenboden (33) an seinem Außenumfang zumindest in dessen oberem Teil ringförmig mit einem Außengewinde (34) ausgeführt ist, das in ein Gegen-Innengewinde (43') im Inneren des Schraubdeckels (41) einschraubbar ist.

18. Vorrichtung nach Anspruch 17, **dadurch gekennzeichnet, dass** die Verbindungsmittel (45, 54; 34, 43') durch Verdrehen des Schraubdeckels (41) in seiner Losdrehrichtung (41') relativ zum Zwischendeckel (5) in Eingriff und durch Verdrehen des Schraubdeckels (41) in seiner Festdrehrichtung (41'') relativ zum Zwischendeckel (5) außer Eingriff bringbar sind.

19. Vorrichtung nach Anspruch 17 oder 18, **dadurch gekennzeichnet, dass** der Zentrifugenboden (33) und der Zwischendeckel (5) miteinander einstückig ausgeführt sind.

20. Vorrichtung nach Anspruch 17 oder 18, **dadurch gekennzeichnet, dass** der Zentrifugenboden (33) und der Zwischendeckel (5) jeweils als separates Bauteil ausgeführt und miteinander in Axialrichtung in eine dichtende, axiale Zugkräfte oder axiale Zug- und Druckkräfte übertragende Steck- oder Schraubverbindung bringbar sind.

21. Vorrichtung nach Anspruch 20, **dadurch gekennzeichnet, dass** zwischen dem Zentrifugenboden (33) und dem Zwischendeckel (5) ein in seiner Axialrichtung hohles Adapterstück (6) eingefügt ist, dessen unterer Teil (62) in zentriertem Eingriff mit dem Zwischendeckel (5) und dessen oberer Teil (61) in zentriertem Eingriff mit dem Zentrifugenboden (33) steht, wobei der Außenumfang (60) des Adapterstücks (6) in dessen oberem und/oder unterem Teil (61, 62) eine ballige Kontur hat, die eine begrenzte Verschwenkung des Adapterstücks (6) relativ zur Axialrichtung erlaubt.

22. Vorrichtung nach Anspruch 21, **dadurch gekennzeichnet, dass** das Adapterstück (6) an seinem Außenumfang (60) zwischen seinem unteren Teil (62) und seinem oberen Teil (61) einen vorragenden Bund oder Kragen (64) aufweist.

23. Vorrichtung nach Anspruch 21 oder 22, **dadurch gekennzeichnet, dass** das Adapterstück (6) in seinem unteren Teil (62) mehrere in Axialrichtung weisende federnde Rastarme (65) mit Rastnasen (65') aufweist, mit denen das Adapterstück (6) in eine Öldurchlassöffnung (52) im Zwischendeckel (5) rastend einsetzbar ist.

24. Vorrichtung nach einem der Ansprüche 17 bis 23, **dadurch gekennzeichnet, dass** zur lösbaren Verbindung von Schraubdeckel (41) und unterem Gehäuseteil (42) miteinander der Schraubdeckel (41) mit einem Außengewinde (43.1) und der untere Gehäuseteil (42) mit einem dazu passenden Innengewinde (43.2) ausgeführt ist oder der Schraubdeckel (41) mit einem Innengewinde und der untere Gehäuseteil (42) mit einem dazu passenden Außengewinde ausgeführt ist.

25. Vorrichtung nach einem der Ansprüche 17 bis 24, **dadurch gekennzeichnet, dass** der Zentrifugenboden (33) mehrere radial von der Aufnahme (35) zu seinem Außenumfang mit dem Außengewinde (34) verlaufende, in Umfangsrichtung voneinander beabstandete Arme (33') aufweist.

26. Vorrichtung nach Anspruch 25, **dadurch gekennzeichnet, dass** die Arme (33') flächig ausgebildet sind, wobei deren Flächenebenen jeweils in Radial- und Axialrichtung liegen.

27. Vorrichtung nach einem der Ansprüche 17 bis 26, **dadurch gekennzeichnet, dass** der Zwischendeckel (5) in den unteren Teil (42) des Gehäuses (4) unter Zwischenlage einer Radial- und/oder Axialdichtung (55) eingesteckt ist.

28. Vorrichtung nach einem der Ansprüche 17 bis 27, **dadurch gekennzeichnet, dass** bei geschlossenem Gehäuse (4) der Zwischendeckel (5) an seinem Außenumfang (57) an der Oberseite einer Stufe (47') im Innenumfang des unteren Gehäuseteils (42) axial abgestützt ist.

29. Vorrichtung nach einem der Ansprüche 17 bis 28, **dadurch gekennzeichnet, dass** die Zentrifuge (3), der Zentrifugenboden (33), der Zwischendeckel (5) und der Schraubdeckel (41) eine vormontierte Einheit bilden, die mit dem unteren Gehäuseteil (42) verschraubbar ist.

30. Vorrichtung nach einem der Ansprüche 17 bis 29, **dadurch gekennzeichnet, dass** die Schraubverbindung (43.1, 43.2) zwischen dem Schraubdeckel (41) und dem festen Gehäuseteil (42) und die Schraubverbindung (34, 43') zwischen dem Schraubdeckel (41) und dem Zentrifugenboden (33) gleichsinnige Gewinde aufweisen.

31. Vorrichtung nach einem der Ansprüche 17 bis 29, **dadurch gekennzeichnet, dass** die Schraubverbindung (43.1, 43.2) zwischen dem Schraubdeckel (41) und dem festen Gehäuseteil (42) und die Schraubverbindung (34, 43') zwischen dem Schraubdeckel (41) und dem Zentrifugenboden (33) gegensinnige Gewinde aufweisen.

32. Vorrichtung nach Anspruch 30 oder 31, **dadurch gekennzeichnet, dass** die Schraubverbindung (34, 43') zwischen dem Schraubdeckel (41) und dem Zentrifugenboden (33) ein Losdrehmoment hat, das größer ist als ein Losdrehmoment der Schraubverbindung (43.1, 43.2) zwischen dem Schraubdeckel (41) und dem festen Gehäuseteil (42).

33. Vorrichtung nach Anspruch 30 oder 31, **dadurch gekennzeichnet, dass** die Schraubverbindung (34, 43') zwischen dem Schraubdeckel (41) und dem Zentrifugenboden (33) ein Losdrehmoment hat, das größer ist als ein Losbrechmoment zwischen dem Zwischendeckel (5) und dem festen Gehäuseteil (42).

34. Vorrichtung nach einem der Ansprüche 17 bis 33, **dadurch gekennzeichnet, dass** zumindest für die Schraubverbindung (34, 43') zwischen dem Schraubdeckel (41) und dem Zentrifugenboden (33) eine lösbare Losdrehsicherung (36) vorgesehen ist.

35. Vorrichtung nach einem der Ansprüche 17 bis 34, **dadurch gekennzeichnet, dass** der Zwischendeckel (5) und der Filtereinsatz (2) relativ zueinander unverbundene und verbindungsmittelfreie Einzelteile der Vorrichtung (1) sind.

36. Vorrichtung nach einem der Ansprüche 17 bis 34, **dadurch gekennzeichnet, dass** der Zwischendeckel (5) und der Filtereinsatz (2) miteinander in Eingriff bringbare, lösbare zweite Verbindungsmittel (23, 53) zur Übertragung axialer Zugkräfte aufweisen.

37. Vorrichtung nach Anspruch 36, **dadurch gekennzeichnet, dass** die zweiten Verbindungsmittel (23, 53) als Rastverbindungsmittel gestaltet sind.

38. Vorrichtung nach Anspruch 36, **dadurch gekennzeichnet, dass** die zweiten Verbindungsmittel (23, 53) als Schraubverbindung oder Bajonettverbindung oder Drehverbindung gestaltet sind.

39. Vorrichtung nach einem der Ansprüche 17 bis 38, **dadurch gekennzeichnet, dass** das Gehäuse (4), der Zentrifugenboden (33), der Zwischendeckel (5) und das Adapterstück (6) spritztechnisch hergestellte Teile aus Kunststoff oder Leichtmetall sind.

## Claims

1. Device (1) for separating impurities from the lubricating oil of an internal combustion engine, wherein the device (1) comprises, on the bottom, a filter insert (2) and above that a centrifuge (3) with a rotor (31) drivable by means of lubricating oil flowing through, wherein the filter insert (2) and the centrifuge (3) are arranged one on top of the other in a joint two-part housing (4) closed during operation of the device (1), with a removable upper screw cover (41) and a fixed bottom housing part (42), wherein a removable intermediate cover (5) is arranged in the housing (4) between filter insert (2) and centrifuge (3), and wherein the centrifuge (3), the intermediate cover (5) and the filter insert (2) can be removed from the housing (4) in its opened condition,
**characterized in that**
- only the screw cover (41) and the intermediate cover (5) comprise detachable connecting means (45, 54; 34, 43') engageable with each other for the transmission of axial tensile forces or axial tensile and compressive forces; and
- relative to each other, the intermediate cover (5) and the filter insert (2) are unconnected component parts of the device (1), and the intermediate cover (5) and/or the filter insert (2) is/are carried out free of connecting means.

2. Device according to claim 1, **characterized in that** the connecting means (45, 54; 34, 43') can be engaged by turning the screw cover (41) in its twist-off direction (41') relative to the intermediate cover (5) and disengaged by turning the screw cover (41) in its tightening direction (41") relative to the intermediate cover (5).

3. Device according to claim 1 or 2, **characterized in that** the connecting means (45, 54), designed as rotary connecting means, of screw cover (41) and intermediate cover (5) are carried out as a bayonet locking type or as a short thread.

4. Device according to claim 2 or 3, **characterized in that** the intermediate cover (5) is bell-shaped and comprises on its outer circumference axially extending ribs (56') which are each formed as connecting means (54) with at least one enlargement or opening extending in circumferential direction, and that the screw cover (41) comprises, on its bottom edge, hooks (44) or lugs pointing in its twist-off direction (41') as connecting means (45) which can be engaged, with the enlargements or openings (54), by turning the screw cover (41) in its twist-off direction (41') relative to the intermediate cover (5) and disengaged by turning the screw cover (41) in its tightening direction (41") relative to the intermediate cover (5).

5. Device according to claim 4, **characterized in that** the ribs (56') comprising the enlargements or openings (54) at the same time serve as stabilization and power deflecting ribs for stiffening the intermediate cover (5) and for deflecting forces on the screw cover (41) having been caused by an oil pressure on the inside of the housing (4) underneath the intermediate cover (5).

6. Device according to claim 2 or 3, **characterized in that** the intermediate cover (5) is bell-shaped and comprises, radially outside on its top side, a plurality of axially upwardly pointing wings (56) spaced apart from each other in circumferential direction, said wings each being designed as connecting means (54) with at least one enlargement or opening pointing in circumferential direction or a recess interlocking radially towards the inside, and that the screw cover (41) comprises - on its bottom edge in its twist-off direction (41') or pointing radially inwardly - hooks (44) or lugs as connecting means (45) which can be engaged, with the connecting means (54) of the intermediate cover (5), by turning the screw cover (41) in its twist-off direction (41') relative to the intermediate cover (5) and disengaged by turning the screw cover (41) in its tightening direction (41 ") relative to the intermediate cover (5).

7. Device according to claim 6, **characterized in that** the connecting means (45) of the screw cover (41), on the one hand, and the wings (56) with the connecting means (54) of the intermediate cover (5), on the other hand, are arranged and designed such that they overlap each other in axial direction already with the intermediate cover (5) inserted in the housing (4), upon placing the screw cover (41) onto the fixed housing part (42) before their threading engagement.

8. Device according to claim 6 or 7, **characterized in that** the wings (56) have, radially on the outside, a guiding contour (58) fitting with motion clearance into the interior of the screw cover (41).

9. Device according to any one of the claims 6 to 8, **characterized in that**, on or next to the wings (56), one step (59) each is provided which projects from the intermediate cover (5) radially towards the outside and on which stands, in tightly screwed condition of the screw cover (41), one section each of its bottom edge (49).

10. Device according to claim 9, **characterized in that** at least one part of the steps (59), on its end pointing in the twist-off direction (41') of the screw cover (41), comprises one upwardly protruding edge (59') each.

11. Device according to claim 10, **characterized in that** - seen in tightening direction (41 ") of the screw cover (41), in front of at least the steps (59) comprising an edge (59') on the intermediate cover (5) - one continuous or intermittent sliding ramp (59") each, lying at the level of the edge (59'), is provided for the bottom edge (49) of the screw cover (41).

12. Device according to any one of the claims 6 to 11, **characterized in that** the wings (56) are connected with each other via one continuous, circumferential collar or combined to one continuous, circumferential collar.

13. Device according to any one of the claims 4 to 12, **characterized in that** the enlargements or openings (54) on the one hand and/or the hooks (44) or lugs on the other hand are designed, on their surfaces engaging with each other, with an incline or step (47) ensuring the engaging position.

14. Device according to any one of the preceding claims, **characterized in that** the screw cover (41) is designed, on its inside circumference, with reinforcement ribs (49') at least in the area of its connecting means (45).

15. Device according to any one of the preceding claims, **characterized in that** the screw cover (41) and/or the intermediate cover (5) each are one-piece injection molded parts of plastic.

16. Device according to any one of the preceding claims, **characterized in that** the screw cover (41) and/or the intermediate cover (5) each are one-piece die cast parts of light metal.

17. Device (1) for separating impurities from the lubricating oil of an internal combustion engine, wherein the device (1) comprises, on the bottom, a filter insert (2) and above that a centrifuge (3) with a rotor (31) drivable by means of lubricating oil flowing through, wherein the filter insert (2) and the centrifuge (3) are arranged one on top of the other in a joint two-part housing (4) closed during operation of the device (1), with a removable upper screw cover (41) and a fixed bottom housing part (42), wherein a removable intermediate cover (5) is arranged in the housing (4) between filter insert (2) and centrifuge (3), and wherein the centrifuge (3), the intermediate cover (5) and the filter insert (2) can be removed from the housing (4) in its opened condition,
**characterized in that**
- the screw cover (41) and the intermediate cover (5) comprise detachable connecting means (45, 54; 34, 43') engageable with each other for the transmission of axial tensile forces or axial tensile and compressive forces;
- the device (1) is carried out with a perforated centrifuge bottom (33) forming one part of the intermediate cover (5) and permitting the flow-through of lubricating oil escaping from the rotor (31);
- the centrifuge bottom (33) comprises, in its center, a receiver (35) for a bottom pivot bearing or bottom axis end of the rotor (31); and
- the centrifuge bottom (33) is carried out, on its outer circumference, at least in its upper part annularly with an outside thread (34) which can be screwed into an inside counter-thread (43') on the inside of the screw cover (41).

18. Device according to claim 17, **characterized in that** the connecting means (45, 54; 34, 43') can be engaged by turning the screw cover (41) in its twist-off direction (41') relative to the intermediate cover (5) and disengaged by turning the screw cover (41) in its tightening direction (41 ") relative to the intermediate cover (5).

19. Device according to claim 17 or 18, **characterized in that** the centrifuge bottom (33) and the intermediate cover (5) are carried out in one piece with each other.

20. Device according to claim 17 or 18, **characterized in that** the centrifuge bottom (33) and the intermediate cover (5) are each carried out as a separate component and can be brought into a sealing plug or screw connection with each other in axial direction, transmitting axial tensile forces or axial tensile and compressive forces.

21. Device according to claim 20, **characterized in that** between the centrifuge bottom (33) and the intermediate cover (5), an adapter piece (6) hollow in its axial direction is inserted whose lower part (62) is in centered engagement with the intermediate cover (5) and whose upper part (61) is in centered engagement with the centrifuge bottom (33), wherein the outside circumference (60) of the adapter piece (6) in its upper and/or lower part (61, 62) has a crowned contour, allowing a limited tilting of the adapter piece (6) relative to the axial direction.

22. Device according to claim 21, **characterized in that** the adapter piece (6) comprises, on its outer circumference (60), a projecting shoulder or collar (64) between its lower part (62) and its upper part (61).

23. Device according to claim 21 or 22, **characterized in that** the adapter piece (6) comprises, in its lower part (62) a plurality of resilient latching arms (65) with latching lugs (65') pointing in axial direction by means of which the adapter piece (6) can be latchingly inserted into an oil flow opening (52) in the intermediate cover (5).

24. Device according to any one of the claims 17 to 23, **characterized in that** - for the detachable connection of screw cover (41) and lower housing part (42) with each other - the screw cover (41) is carried out with an outside thread (43.1) and the lower housing part (42) with a fitting inside thread (43.2), or the screw cover (41) is carried out with an inside thread and the lower housing part (42) with a fitting outside thread.

25. Device according to any one of the claims 17 to 24, **characterized in that** the centrifuge bottom (33) comprises a plurality of arms (33') spaced apart from each other in circumferential direction and extending radially from the receiver (35) to its outside circumference with the outside thread (34).

26. Device according to claim 25, **characterized in that** the arms (33') are planar in design, with their planar levels each lying in radial and axial direction.

27. Device according to any one of the claims 17 to 26, **characterized in that** the intermediate cover (5) is inserted in the lower part (42) of the housing (4) under an intermediate layer of a radial and/or axial seal (55).

28. Device according to any one of the claims 17 to 27, **characterized in that**, with closed housing (4), the intermediate cover (5) is axially supported on its outer circumference (57) on the upper side of a step (47') in the inside circumference of the lower housing part (42).

29. Device according to any one of the claims 17 to 28, **characterized in that** the centrifuge (3), the centrifuge bottom (33), the intermediate cover (5) and the screw cover (41) form a preassembled unit which can be screwed with the lower housing part (42).

30. Device according to any one of the claims 17 to 29, **characterized in that** the screw connection (43.1, 43.2) between the screw cover (41) and the fixed housing part (42) and the screw connection (34, 43') between the screw cover (41) and the centrifuge bottom (33) comprise same direction threads.

31. Device according to any one of the claims 17 to 29, **characterized in that** the screw connection (43.1, 43.2) between the screw cover (41) and the fixed housing part (42) and the screw connection (34, 43') between the screw cover (41) and the centrifuge bottom (33) comprise opposite direction threads.

32. Device according to claim 30 or 31, **characterized in that** the screw connection (34, 43') between the screw cover (41) and the centrifuge bottom (33) has a release torque which is greater than a release torque of the screw connection (43.1, 43.2) between the screw cover (41) and the fixed housing part (42).

33. Device according to claim 30 or 31, **characterized in that** the screw connection (34, 43') between the screw cover (41) and the centrifuge bottom (33) has a release torque which is greater than a break-off torque between the intermediate cover (5) and the fixed housing part (42).

34. Device according to any one of the claims 17 to 33, **characterized in that** a detachable release safety (36) is provided at least for the screw connection (34, 43') between the screw cover (41) and the centrifuge bottom (33).

35. Device according to any one of the claims 17 to 34, **characterized in that** the intermediate cover (5) and the filter insert (2) are, relative to each other, individual parts of the device (1) which are unconnected and free of connection means.

36. Device according to any one of the claims 17 to 34, **characterized in that** the intermediate cover (5) and the filter insert (2) comprise detachable second connecting means (23, 53) engageable with each other for the transmission of axial tensile forces.

37. Device according to claim 36, **characterized in that** the second connecting means (23, 53) are designed as latch connecting means.

38. Device according to claim 36, **characterized in that** the second connecting means (23, 53) are designed as screw connection or bayonet connection or rotary connection.

39. Device according to any one of the claims 17 to 38, **characterized in that** the housing (4), the centrifuge bottom (33), the intermediate cover (5) and the adapter piece (6) are injection molded plastic parts or die cast light metal parts.

## Revendications

1. Dispositif (1) pour séparer de l'huile de graissage d'un moteur à combustion interne les impuretés qu'elle contient, le dispositif (1) présentant dans le bas un insert filtrant (2) et, au-dessus, une centrifugeuse (3) avec un rotor (31) entraînable au moyen de l'huile de graissage de passage, l'insert filtrant (2) et la centrifugeuse (3) étant situés l'un au-dessus de l'autre dans un boîtier commun en deux parties, fermé pendant le fonctionnement du dispositif (1) et comportant un couvercle à visser (41) supérieur amovible et une partie de boîtier (42) inférieure fixe, un couvercle intermédiaire retirable (5) étant situé dans le boîtier (4) entre l'insert filtrant (2) et la centrifugeuse (3), et la centrifugeuse (3), le couvercle intermédiaire (5) et l'insert filtrant (2) pouvant être retirés du boîtier (4) lorsque celui-ci est ouvert,
**caractérisé en ce que**
- seul le couvercle à visser (41) et le couvercle intermédiaire (5) comportent des moyens de liaison (45, 54 ; 34, 43'), détachables et pouvant être engagés les uns dans les autres, pour transmettre des forces de traction axiales ou des forces de traction et de pression axiales et
- le couvercle intermédiaire (5) et l'insert filtrant (2) sont, dans leur relation entre eux, des composants du dispositif (1) non reliés et le couvercle intermédiaire (5) et/ou l'insert filtrant (2) est/sont réalisé(s) sans moyens de liaison.

2. Dispositif selon la revendication 1, **caractérisé en ce que** les moyens de liaison (45, 54 ; 34, 43') peuvent être engagés par rotation du couvercle à visser (41) dans le sens de son dévissage (41') relativement au couvercle intermédiaire (5) et peuvent être désengagés par rotation du couvercle à visser (41) dans le sens de son vissage (41") relativement au couvercle intermédiaire (5).

3. Dispositif selon la revendication 1 ou 2, **caractérisé en ce que** les moyens (45, 54) de liaison du couvercle à visser (41) et du couvercle intermédiaire (5), lesquels se présentent sous la forme de moyens de liaison rotatifs, sont de type fermeture à baïonnette ou se présentent sous la forme d'un filet court.

4. Dispositif selon la revendication 2 ou 3, **caractérisé en ce que** le couvercle intermédiaire (5) a la forme d'une cloche et présente, sur son pourtour extérieur, des nervures axiales (56') qui se présentent chacune avec au moins un élargissement ou orifice tourné dans le sens du pourtour en tant que moyen de liaison (54) et **en ce que** le couvercle à visser (41) présente, en son bord inférieur, des crochets (44) ou ergots orientés dans le sens de son dévissage (41') en tant que moyens de liaison (45) qui peuvent être engagés dans les élargissements ou orifices (54) par rotation du couvercle à visser (41) dans le sens de son dévissage (41') relativement au couvercle intermédiaire (5) et peuvent en être désengagés par rotation du couvercle à visser (41) dans le sens de son vissage (41") relativement au couvercle intermédiaire (5).

5. Dispositif selon la revendication 4, **caractérisé en ce que** les nervures (56') présentant les élargissements ou orifices (54) sont en même temps des nervures de stabilisation et de dérivation de force servant à rigidifier le couvercle intermédiaire (5) et à dériver vers le couvercle à visser (41) des forces dues à une pression de l'huile à l'intérieur du boîtier (4) en dessous du couvercle intermédiaire (5).

6. Dispositif selon la revendication 2 ou 3, **caractérisé en ce que** le couvercle intermédiaire (5) a la forme d'une cloche et présente, radialement extérieurement sur sa face supérieure, plusieurs ailes (56) espacées dans le sens du pourtour et orientées vers le haut dans le sens axial, lesquelles sont réalisées chacune avec au moins un élargissement ou orifice orientés dans le sens du pourtour ou un creux orienté radialement vers l'intérieur en tant que moyens de liaison (54) et **en ce que** le couvercle à visser (41) présente, sur son bord inférieur, des crochets (44) ou ergots orientés dans le sens de son dévissage (41') ou radialement vers l'intérieur en tant que moyens de liaison (45) qui peuvent être engagés dans les moyens de liaison (54) du couvercle intermédiaire (5) par rotation du couvercle à visser (41) dans le sens de son dévissage (41') relativement au couvercle intermédiaire (5) et peuvent en être désengagés par rotation du couvercle à visser (41) dans le sens de son vissage (41 ") relativement au couvercle intermédiaire (5).

7. Dispositif selon la revendication 6, **caractérisé en ce que** les moyens de liaison (45) du couvercle à visser (41), d'une part, et les ailes (56) avec les moyens de liaison (54) du couvercle intermédiaire (5), d'autre part, sont disposés et réalisés de manière telle que, lorsque le couvercle intermédiaire (5) est déjà placé dans le boîtier (4), ils se chevauchent dans le sens axial lors d'une pose du couvercle à visser (41) sur la partie fixe du boîtier (42) avant engagement des filets de ceux-ci.

8. Dispositif selon la revendication 6 ou 7, **caractérisé en ce que** les ailes (56) ont, radialement extérieurement, un contour de guidage (58) qui s'engage avec jeu de mouvement dans l'intérieur du couvercle de vissage (41).

9. Dispositif selon l'une des revendications 6 à 8, **caractérisé en ce qu'**est prévu, sur ou à côté des ailes (56), respectivement un gradin (59) qui fait saillie radialement vers l'extérieur à partir du couvercle intermédiaire (5) et sur lequel se dresse respectivement, lorsque le couvercle à visser (41) est vissé à fond, une partie du bord inférieur (49) de celui-ci.

10. Dispositif selon la revendication 9, **caractérisé en ce qu'**au moins une partie des gradins (59) présentent, en leur extrémité orientée dans le sens du dévissage (41') du couvercle à visser (41), respectivement un bord (59') en saillie vers le haut.

11. Dispositif selon la revendication 10, **caractérisé en ce qu'**est prévue, vu dans le sens du vissage (41") du couvercle à visser (41), devant au moins les gradins (59) qui présentent un bord (59'), sur le couvercle intermédiaire (5), respectivement une rampe de coulissement (59"), continue ou interrompue, située à hauteur du bord (59') pour le bord inférieur (49) du couvercle à visser (41).

12. Dispositif selon l'une des revendications 6 à 11, **caractérisé en ce que** les ailes (56) sont reliées entre elles par l'intermédiaire d'un rebord périphérique continu ou sont assemblées pour former un rebord périphérique continu.

13. Dispositif selon l'une des revendications 4 à 12, **caractérisé en ce que** les élargissements ou orifices (54), d'une part, et/ou les crochets (44) ou ergots, d'autre part, sont réalisés, au niveau de leurs faces qui s'engagent les unes dans les autres, avec une oblique ou un gradin (47) assurant la position d'engagement.

14. Dispositif selon l'une des revendications précédentes, **caractérisé en ce que** le couvercle à visser (41) est réalisé avec des nervures de renforcement (49') sur son pourtour intérieur au moins dans la partie de ses moyens de liaison (45).

15. Dispositif selon l'une des revendications précédentes, **caractérisé en ce que** le couvercle à visser (41) et/ou le couvercle intermédiaire (5) sont chacun des monopièces moulées par injection de matière plastique.

16. Dispositif selon l'une des revendications précédentes, **caractérisé en ce que** le couvercle à visser (41) et/ou le couvercle intermédiaire (5) sont chacun des monopièces en métal léger moulées sous pression.

17. Dispositif (1) pour séparer de l'huile de graissage d'un moteur à combustion interne les impuretés qu'elle contient, le dispositif (1) présentant dans le bas un insert filtrant (2) et, au-dessus, une centrifugeuse (3) avec un rotor (31) entraînable au moyen de l'huile de graissage de passage, l'insert filtrant (2) et la centrifugeuse (3) étant situés l'un au-dessus de l'autre dans un boîtier commun en deux parties, fermé pendant le fonctionnement du dispositif (1) et comportant un couvercle à visser (41) supérieur amovible et une partie de boîtier (42) inférieure fixe, un couvercle intermédiaire retirable (5) étant situé dans le boîtier (4) entre l'insert filtrant (2) et la centrifugeuse (3), et la centrifugeuse (3), le couvercle intermédiaire (5) et l'insert filtrant (2) pouvant être retirés du boîtier (4) lorsqu'il est ouvert,
**caractérisé en ce que**
- le couvercle à visser (41) et le couvercle intermédiaire (5) comportent des moyens de liaison (45, 54 ; 34, 43'), détachables et pouvant être engagés les uns dans les autres, pour transmettre des forces de traction axiales ou des forces de traction et de pression axiale,
- le dispositif (1) est réalisé avec un fond de centrifugeuse (33) ajouré, permettant un passage de l'huile de graissage qui sort du rotor (31), et formant une partie du couvercle intermédiaire (5),
- le fond de centrifugeuse (33) présente, en son centre, un logement (35) pour un palier rotatif inférieur ou une extrémité d'axe inférieure du rotor (31) et
- le fond de centrifugeuse (33) est réalisé, sur son pourtour extérieur et au moins dans la partie supérieure de celui-ci, sous une forme annulaire avec un filet extérieur (34) qui peut être vissé dans un filet intérieur complémentaire (43') à l'intérieur du couvercle à visser (41).

18. Dispositif selon la revendication 17, **caractérisé en ce que** les moyens de liaison (45, 54 ; 34, 43') peuvent être engagés par rotation du couvercle à visser (41) dans le sens de son dévissage (41') relativement au couvercle intermédiaire (5) et peuvent être désengagés par rotation du couvercle à visser (41) dans le sens de son vissage (41 ") relativement au couvercle intermédiaire (5).

19. Dispositif selon la revendication 17 ou 18, **caractérisé en ce que** le fond de centrifugeuse (33) et le couvercle intermédiaire (5) sont réalisés ensemble d'une seule pièce.

20. Dispositif selon la revendication 17 ou 18, **caractérisé en ce que** le fond de centrifugeuse (33) et le couvercle intermédiaire (5) sont réalisés chacun sous la forme d'un composant séparé et peuvent être assemblés entre eux dans le sens axial pour constituer une liaison par emboîtement ou par vissage étanche et transmettant des forces de traction axiales ou des forces de traction et de pression axiales.

21. Dispositif selon la revendication 20, **caractérisé en ce qu'**est inséré, entre le fond de centrifugeuse (33) et le couvercle intermédiaire (5), un adaptateur (6) creux dans son sens axial, dont la partie inférieure (62) est en engagement centré avec le couvercle intermédiaire (5) et dont la partie supérieure (61) est en engagement centré avec le fond de centrifugeuse (33), le pourtour extérieur (60) de l'adaptateur (6) ayant, dans la partie supérieure et/ou inférieure de celui-ci (61, 62), un contour convexe qui permet un pivotement limité de l'adaptateur (6) relativement au sens axial.

22. Dispositif selon la revendication 21, **caractérisé en ce que** l'adaptateur (6) présente, sur son pourtour extérieur (60), entre sa partie inférieure (62) et sa partie supérieure (61), une collerette ou un rebord (64) en saillie.

23. Dispositif selon la revendication 21 ou 22, **caractérisé en ce que** l'adaptateur (6) comporte, en sa partie inférieure (62), plusieurs bras d'enclenchement élastiques (65), orientés dans le sens axial et présentant des ergots d'enclenchement (65'), lesquels permettent l'insertion par enclenchement de l'adaptateur (6) dans un orifice de passage d'huile (52) dans le couvercle intermédiaire (5).

24. Dispositif selon l'une des revendications 17 à 23, **caractérisé en ce que**, pour défaire la liaison entre le couvercle à visser (41) et la partie de boîtier inférieure (42), le couvercle à visser (41) est réalisé avec un filet extérieur (43.1) et la partie de boîtier inférieure (42), avec un filet intérieur complémentaire (43.2), ou le couvercle à visser (41) est réalisé avec un filet intérieur et la partie de boîtier inférieure (42), avec un filet extérieur complémentaire.

25. Dispositif selon l'une des revendications 17 à 24, **caractérisé en ce que** le fond de centrifugeuse (33) présente plusieurs bras (33'), espacés dans le sens du pourtour et allant radialement du logement (35) vers le pourtour extérieur dudit fond avec son filet extérieur (34).

26. Dispositif selon la revendication 25, **caractérisé en ce que** les bras (33') sont de réalisation plane, leurs plans de surface étant situés respectivement dans le sens radial et dans le sens axial.

27. Dispositif selon l'une des revendications 17 à 26, **caractérisé en ce que** le couvercle intermédiaire (5) est emboîté dans la partie inférieure (42) du boîtier (4) avec un élément d'étanchéité radiale et/ou axiale (55) intercalé.

28. Dispositif selon l'une des revendications 17 à 27, **caractérisé en ce que**, lorsque le boîtier (4) est fermé, le couvercle intermédiaire (5) prend appui axialement, en son pourtour extérieur (57), sur la face supérieure d'un gradin (47') dans le pourtour intérieur de la partie de boîtier inférieure (42).

29. Dispositif selon l'une des revendications 17 à 28, **caractérisé en ce que** la centrifugeuse (3), le fond de centrifugeuse (33), le couvercle intermédiaire (5) et le couvercle à visser (41) constituent une unité prémontée qui peut être vissée sur la partie de boîtier inférieure (42).

30. Dispositif selon l'une des revendications 17 à 29, **caractérisé en ce que** la liaison par vissage (43.1, 43.2) entre le couvercle à visser (41) et la partie de boîtier fixe (42) et la liaison par vissage (34, 43') entre le couvercle à visser (41) et le fond de centrifugeuse (33) présentent des filetages de même sens.

31. Dispositif selon l'une des revendications 17 à 29, **caractérisé en ce que** la liaison par vissage (43.1, 43.2) entre le couvercle à visser (41) et la partie de boîtier fixe (42) et la liaison par vissage (34, 43') entre le couvercle à visser (41) et le fond de centrifugeuse (33) présentent des filetages de sens contraire.

32. Dispositif selon la revendication 30 ou 31, **caractérisé en ce que** la liaison par vissage (34, 43') entre le couvercle à visser (41) et le fond de centrifugeuse (33) a un couple de dévissage supérieur à un couple de dévissage de la liaison par vissage (43.1, 43.2) entre le couvercle à visser (41) et la partie de boîtier fixe (42).

33. Dispositif selon la revendication 30 ou 31, **caractérisé en ce que** la liaison par vissage (34, 43') entre le couvercle à visser (41) et le fond de centrifugeuse (33) a un couple de dévissage supérieur à un couple de dévissage entre le couvercle intermédiaire (5) et la partie de boîtier fixe (42).

34. Dispositif selon l'une des revendications 17 à 33, **caractérisé en ce qu'**une protection anti-desserrage détachable (36) est prévue au moins pour la liaison par vissage (34, 43') entre le couvercle à visser (41) et le fond de centrifugeuse (33).

35. Dispositif selon l'une des revendications 17 à 34, **caractérisé en ce que** le couvercle intermédiaire (5) et l'insert filtrant (2) sont des composants du dispositif (1) non reliés entre eux et sans moyens de liaison.

36. Dispositif selon l'une des revendications 17 à 34, **caractérisé en ce que** le couvercle intermédiaire (5) et l'insert filtrant (2) comportent des deuxièmes moyens de liaison (23, 53) détachables et pouvant être engagés l'un dans l'autre pour transmettre des forces de traction axiales.

37. Dispositif selon la revendication 36, **caractérisé en ce que** les deuxièmes moyens de liaison (23, 53) se présentent sous la forme de moyens de liaison par enclenchement.

38. Dispositif selon la revendication 36, **caractérisé en ce que** les deuxièmes moyens de liaison (23, 53) se présentent sous la forme d'une liaison par vissage ou d'une liaison par baïonnette ou d'une liaison rotative.

39. Dispositif selon l'une des revendications 17 à 38, **caractérisé en ce que** le boîtier (4), le fond de centrifugeuse (33), le couvercle intermédiaire (5) et l'adaptateur (6) sont des pièces en matière plastique ou en métal léger fabriquées selon une technique d'injection.
